# EUROPÄISCHE PATENTANMELDUNG

(11) **EP 4 266 222 A1**
(43) Veröffentlichungstag der Anmeldung: **25.10.2023**
(21) Anmeldenummer: 23168519.9
(22) Anmeldetag: 18.04.2023
(51) Int. Cl.: G06Q 10/047, G06Q 10/08, G06Q 10/30, G06Q 50/30, B65F 1/00, B65F 3/00

(54) **VERFAHREN ZUM STEUERN VON ENTLEERUNGSFAHRZEUGEN ZUM ENTLEEREN VON WERTSTOFFBEHÄLTERN**

(30) Priorität: 20.04.2022 AT 502622022
(71) Anmelder: Saubermacher Dienstleistungs AG, 8073 Feldkirchen bei Graz (AT)
(72) Erfinder: Neumair, Jonas, 8020 Graz (AT); Opelt, Andreas, 8047 Graz (AT); Wintersteller, Wolfgang, 8010 Graz (AT)
(74) Vertreter: Dilg, Haeusler, Schindelmann Patentanwaltsgesellschaft mbH

(57) **Zusammenfassung**

Die vorliegende Erfindung betrifft ein Verfahren zum Steuern von Entleerungsfahrzeugen zum Entleeren von Wertstoffbehälter (103). Das Verfahren weist ein Bestimmen eines Füllstands einer Wertstofffraktion (105) eines Wertstoffbehälters (103) mittels eines Füllstandindikators, ein Bestimmen von Positionsdaten des Wertstoffbehälters (103) und des Entleerungsfahrzeugs (110), und ein Bestimmen von Fahrstreckeninformationen zwischen einem Entleerungsfahrzeug (110) und dem Wertstoffbehälter (103) mittels einer Steuereinheit (108) basierend auf den Positionsdaten des Wertstoffbehälters (103) und des Entleerungsfahrzeugs (110). Ferner werden Steueranweisungen für das Entleerungsfahrzeug (110) zum Entleeren des Wertstoffbehälters (103) mittels der Steuereinheit (108) erstellt zumindest basierend auf dem Füllstand des Wertstoffbehälters (103) und den Fahrstreckeninformationen, wobei die Steueranweisungen einen Abfahrzeitpunkt des Entleerungsfahrzeugs (110) und eine Fahrroute (F1-F4) des Entleerungsfahrzeugs (110) zu dem Wertstoffbehälter (103) aufweisen.

## Beschreibung

### Technisches Gebiet

Die vorliegende Erfindung betrifft ein Verfahren und ein System zum Steuern von Entleerungsfahrzeugen zum Entleeren von Wertstoffbehälter und beispielsweise zum Steuern von Entleerungsfahrzeugen zu einem Verwerter.

### Hintergrund der Erfindung

In der modernen Abfallwirtschaft werden Recyclinghöfe vorgesehen, in denen der Verbraucher eine Vielzahl von Wertstoffen getrennt in entsprechende Wertstoffbehälter abgeben kann. Die damit verbundene Trennung von Wertstoffen ist teils freiwillig dem Verbrauch überlassen, mehr und mehr jedoch bestimmt durch gesetzliche Vorgaben. Mit dem Anstieg der verschiedenen getrennten Wertstoffe steigt auch die Anforderung an die Abfallwirtschaft, diese Vielzahl von getrennten Wertstoffen von einer oder mehrerer Sammelstellen abzuholen und beispielsweise einem bestimmten Verwerter zuzuführen. Aufgrund der Komplexität einer entsprechenden Logistik ist es oftmals schwierig, Ressourcen, wie beispielsweise die Kapazität und die Wirtschaftlichkeit der Entleerungsfahrzeuge sicherzustellen. Oftmals fahren Entleerungsfahrzeuge zu nur teils gefüllten Wertstoffbehältern, sodass unnötig Fahrstrecken des Entleerungsfahrzeugs abgefahren werden. Andererseits besteht oftmals die Gefahr, dass Entleerungsbehälter teils überfüllt sind bzw. die Kapazität der Entleerungsfahrzeuge nicht ausreicht, um einen Wertstoffbehälter vollständig auszuleeren. Dies verursacht erneut eine zusätzliche Fahrt eines Entleerungsfahrzeugs und eine Reduzierung der Effizienz. Neben der Verringerung der Effizienz werden durch unnötige Fahrten umweltbelastende Abgase erzeugt, sodass ebenfalls die Schadstoffbilanz für die Entleerung der Wertstoffbehälter negativ ist.

### Darstellung der Erfindung

Es ist eine Aufgabe der vorliegenden Erfindung, ein Verfahren zum Entleeren von Wertstoffbehältern bereitzustellen, welche die Effizienz wie auch die Schadstoffbilanz für die Entleerung von Wertstoffbehälter verbessert.

Diese Aufgabe wird mit einem Verfahren sowie einem System zum Steuern von Entleerungsfahrzeugen zum Entleeren von Wertstoffbehälter gemäß den unabhängigen Ansprüchen gelöst.

Gemäß einem ersten Aspekt der vorliegenden Erfindung wird ein Verfahren zum Steuern von Entleerungsfahrzeugen zum Entleeren von Wertstoffbehälter beschrieben. Gemäß dem Verfahren wird ein Füllstand einer Wertstofffraktion eines Wertstoffbehälters mittels eines Füllstandindikators, beispielsweise erhalten mittels eines Füllstandssensors, bestimmt. Ferner werden Positionsdaten des Wertstoffbehälters und des Entleerungsfahrzeugs bestimmt. Mittels einer Steuereinheit werden Fahrstreckeninformationen zwischen einem Entleerungsfahrzeug und dem Wertstoffbehälter bestimmt basierend auf den Positionsdaten des Wertstoffbehälters und des Entleerungsfahrzeugs. Ferner werden Steueranweisungen für das Entleerungsfahrzeug zum Entleeren des Wertstoffbehälters mittels der Steuereinheit erstellt zumindest basierend auf dem Füllstand des Wertstoffbehälters und den Fahrstreckeninformationen, wobei die Steueranweisungen einen Abfahrzeitpunkt des Entleerungsfahrzeugs und eine Fahrroute des Entleerungsfahrzeugs zu dem Wertstoffbehälter aufweisen.

Gemäß einem weiteren Aspekt der vorliegenden Erfindung wird ein System zum Steuern von Entleerungsfahrzeugen zum Entleeren von Wertstoffbehältern beschrieben. Das System weist einen Wertstoffbehälter, welcher konfiguriert ist, mittels eines Füllstandindikators einen Füllstand einer Wertstofffraktion des Wertstoffbehälters zu bestimmen, und ein Entleerungsfahrzeug zum Entleeren des Wertstoffbehälters auf. Ferner weist das System eine Positionsdateneinheit zum Bestimmen von Positionsdaten des Wertstoffbehälters und des Entleerungsfahrzeugs auf. Das System weist zudem eine Steuereinheit auf, welche mit der Positionsdateneinheit gekoppelt ist und konfiguriert ist zum Bestimmen von Fahrstreckeninformationen zwischen dem Entleerungsfahrzeug und dem Wertstoffbehälter basierend auf den Positionsdaten des Wertstoffbehälters und des Entleerungsfahrzeugs. Die Steuereinheit ist ferner konfiguriert basierend auf dem Füllstand des Wertstoffbehälters und den Fahrstreckeninformationen Steueranweisungen für das Entleerungsfahrzeug zum Entleeren des Wertstoffbehälters zu erstellen, wobei die Steueranweisungen einen Abfahrzeitpunkt des Entleerungsfahrzeugs und eine Fahrroute es Entleerungsfahrzeugs zu dem Wertstoffbehälter aufweisen.

An einer Sammelstelle bzw. einer Sammelinsel sind beispielsweise eine oder eine Vielzahl von Wertstoffbehältern platziert, in welchen jeweils eine Wertstofffraktion von einem Verbraucher abgegeben werden kann. Der Wertstoff bezeichnet ein Gut, welches als getrenntes Gut für den Weitertransport zu einem Zielort, beispielsweise zu einem Verwerter des Wertstoffs, in einem Wertstoffbehälter zwischengelagert wird. Eine Wertstofffraktion kann beispielsweise aus festem Material, wie beispielsweise Schüttgut oder Stückware, oder aus flüssigem Material, wie beispielsweise Öle oder Benzin, bestehen. Eine Wertstofffraktion kann beispielsweise eine Struktur gleicher Materialien darstellen. Typische Wertstofffraktionen können beispielsweise Glas bzw. Glasflaschen, Kunststoffmaterialien, sonstige Verpackungsmaterialien, Metalle oder Naturmaterialien, wie beispielsweise Holz oder Textilien, darstellen. Ferner kann eine Wertstofffraktion Gefahrengut aufweisen, wie beispielsweise Batterien, Öle oder sonstige Sondermaterialien darstellen.

Der Wertstoffbehälter ist an einer Sammelstelle angeordnet und dient zum Aufnehmen der Wertstofffraktionen insbesondere von einem Verbraucher.

Der Füllstandindikator weist insbesondere Informationen und Parameter betreffend den Füllstand eines Wertstoffbehälters auf. Dabei kann in einer beispielhaften Ausführungsform der Wertstoffbehälter einen Füllstandssensor aufweisen. Ferner kann der Füllstandindikator z.B. Füllstandinformationen basierend auf Fahrer-Feedback des Fahrers eines Entleerungsfahrzeugs, einer Waage zur Gewichtsmessung des Wertstoffbehälters oder der Wertstofffraktion, oder Erfahrungswerten basierend auf z.B. historischen Fahrzeug-Wiegedaten bei den Verwertern.

Gemäß einer beispielhaften Ausführungsform ist der Wertstoffbehälter insbesondere mit einem Füllstandssensor ausgestattet. Mittels des Füllstandssensors kann entsprechend ein Befüllungsgrad als Füllstandindikator des Wertstoffbehälters gemessen werden. Der Füllstandssensor kann beispielsweise basierend auf einer Laufzeitmessung, insbesondere mittels Ultraschallwellen oder Radarwellen, mittels optischer Füllstandsmesstechnik fungieren. Beispielsweise kann eine Füllstand Messung kontinuierlich den Füllstand feststellen und übermitteln. Alternativ kann beispielsweise in Schritten, z.B. in 10% Schritten, der jeweilige Füllstand übertragen werden, um Ressourcen bei der Datenübertragung zu reduzieren. Der Füllstand kann z.B. mittels Ultraschalls in einem Frequenzbereich von bis zu 16 Ghz gemessen werden. Ferner kann beispielsweise ein Zustand bzw. ein Füllstand des Wertstoffbehälters basierend auf Daten betreffend die Anzahl der Entleerungen oder die Anzahl an Deckelöffnungen von Deckeln des Wertstoffbehälters. Als Standard zur Datenübertragung kann beispielsweise der NBIoT (900mHz) Standard verwendet werden. Die Wertstoffbehälter weisen beispielsweise eine eigene Energieversorgung auf. Beispielsweise können Batterien eingesetzt werden mit einer Batterielaufzeit von bis zu 10 Jahren. Alternativ können Photovoltaikpaneele an den Wertstoffbehältern angeordnet sein, um eine Energieversorgung bereitzustellen.

Aufgrund der Anordnung des Füllstandssensors in dem Wertstoffbehälter kann berücksichtigt werden, dass sich aufgrund der Montageposition des Füllstandssensors im Wertstoffbehälter, z.B. nicht direkt am Deckel, sondern am Gestänge unterhalb, ein Puffer von ungefähr 25% des maximalen Füllstandsvolumen ergibt. Übermittelt der Füllstandssensor einen Füllstand von 100%, da der Behälterinhalt den Füllstandssensor bereits berührt, ergibt sich ein tatsächlicher Füllstand von 75% und 25% Fassungsvolumen sind bis zum Behälterdeckel noch freibleibend. Dies kann beispielsweise bei der Bestimmung der Steueranweisungen durch die Steuereinheit berücksichtigt werden. So werden beispielsweise auch Fehlertoleranzen von Messeinheiten (Sensoren, Waagen) und Fehlschätzungen durch einen Fahrer berücksichtigt.

Bei liquiden Wertstofffraktion kann beispielsweise über einer Füllstand Messung mittels eines Schwimmers oder über kapazitive Meßsensoren ein Füllstand bestimmt werden. Entsprechend kann ein erfindungsgemäßer Wertstoffbehälter Daten bezüglich des Füllstands einer Wertstofffraktion insbesondere der Steuereinheit bereitstellen.

Ferner werden die Positionsdaten der Sammelstelle bzw. der Wertstoffbehälter mittels einer Positionsdateneinheit bestimmt. Die Positionsdateneinheit kann beispielsweise aus einer Datenbank entsprechende Positionsdaten der Wertstoffbehälter beziehen. Ferner kann ein Wertstoffbehälter mit einem Ortsbestimmungssensor, wie beispielsweise einem GPS-Sensor, ausgestattet sein, um die aktuellen Positionsdaten des Wertstoffbehälters bereitzustellen.

Ein Entleerungsfahrzeug weist zumindest einen Aufnahmebehälter zum Aufnehmen einer Wertstofffraktion auf. Ferner kann ein Entleerungsfahrzeug mehrere Aufnahmebehälter aufweisend zum Aufnehmen mehrerer Wertstofffraktionen. So kann beispielsweise ein Entleerungsfahrzeug Wertstofffraktionen aus zwei unterschiedlichen Wertstoffbehältern einer Sammelstelle entladen und die entsprechenden Wertstofffraktionen aufnehmen. Ein Entleerungsfahrzeug weist insbesondere eine entsprechende Handhabungsmechanik auf, um einen Wertstoffbehälter zu entleeren. Beispielsweise kann der Wertstoffbehälter entsprechend gegriffen werden und geöffnet werden, sodass die entsprechenden Wertstofffraktion in den Aufnahmebehälter des Entleerungsfahrzeugs aufgenommen werden kann.

Insbesondere weist das Entleerungsfahrzeug eine Aufnahme zum Aufnehmen des Wertstoffbehälters auf. So kann das Entleerungsfahrzeug zum Entleeren den gesamten Wertstoffbehälter aufnehmen und ggf. einen leeren Ersatz-Werkstoffbehälter platzieren. Entsprechend wird unter dem Begriff "Entleeren eins Wertstoffbehälters" ebenfalls ein Austausch eines Wertstoffbehälters verstanden.

Das Entleerungsfahrzeug weist ferner insbesondere ein Steuergerät auf, welches mit dem Navigationssystem des Entleerungsfahrzeugs bzw. des Fahrers des Entleerungsfahrzeugs und mit der Steuereinheit zum Austauschen der Steuereinweisungen gekoppelt ist.

Die Steuereinheit ist insbesondere mit der Positionsdateneinheit gekoppelt oder weist diese auf. Die Steuereinheit weist beispielsweise einen Prozessor auf, welcher basierend auf den bezogenen oder eingegebenen Daten mittels eines Steueralgorithmus die Steueranweisung für das Entleerungsfahrzeug generiert. Die Steuereinheit kann beispielsweise einen zentralen Server aufweisen, welcher mit dezentralen Client-Computern bzw. Client-Einheiten zum Austausch von Daten gekoppelt ist. Die Client-Einheiten stellen beispielsweise die Entleerungsfahrzeuge oder die Wertstoffbehälter graphisch dar, und ebenso entsprechende Daten, wie beispielsweise die Füllstandsdaten oder die Positionsdaten, an die Steuereinheit übertragen werden. Die Steuereinheit selbst kann eine Anzeigeeinheit aufweisen, um die Eingangsdaten wie auch die erzeugten Steueranweisungen grafisch dem Benutzer zur Information darzustellen. Ferner kann die Steuereinheit selbst eine Eingabeeinrichtung aufweisen, wonach Eingangsdaten manuell eingegeben und vorgegeben werden können. Alternativ können die entsprechenden Informationen über Datenbanken bezogen werden.

Im Rahmen der vorliegenden Erfindung kann unter dem Begriff "Steuereinheit" insbesondere eine Entität verstanden werden, die Prozessorressourcen und Speicherressourcen aufweist. Der Prozessor kann zum Abarbeiten einer in einem Speicher gespeicherten Software ausgebildet sein und kann (zum Beispiel zum Erstellen der Steueranweisungen) auf die Speicherressourcen zugreifen. Beispielsweise kann die Steuereinrichtung ein Computer, insbesondere ein Server-Computer, sein.

So können beispielsweise die Bedieneinheiten, wie beispielsweise Desktop-Computer, ein Smartphone oder ein Tablet-Computer, drahtlos mit der Steuereinheit, beispielsweise über ein Kommunikationsnetzwerk (z.B. Internet), kommunizieren, um Daten der Steuereinheit bereitzustellen oder entsprechende Daten, wie beispielsweise die Steueranweisungen betreffenden Abfahrtszeiten des Entleerungsfahrzeugs oder eine Fahrroute des Entleerungsfahrzeugs zu dem Wertstoffbehälter zu beziehen.

Die Steuereinheit ist insbesondere dazu konfiguriert, basierend auf den Positionsdaten des Wertstoffbehälters und des Entleerungsfahrzeugs Fahrstreckeninformationen zwischen diesen zu erstellen. Dabei können wie im Weiteren dargestellt eine Vielzahl von Parametern, wie beispielsweise Tageszeit, Verkehrsbelastung oder Beschaffenheit des Entleerungsfahrzeugs, herangezogen werden, um die Fahrstreckeninformationen zu erstellen. Die Fahrstreckeninformationen können basierend auf virtuellen bzw. Onlinekartendiensten, wie beispielsweise Google Maps oder Here Online-Geodatendienst, erzeugt werden.

Die Steuereinheit ist ferner insbesondere dazu konfiguriert basierend auf den Fahrstreckeninformationen und dem Füllstand des entsprechenden Wertstoffbehälters Steueranweisungen für das Entleerungsfahrzeug zu generieren.

Die Steueranweisungen umfassen zumindest einen Abfahrtszeitpunkt des Entleerungsfahrzeugs und eine Fahrroute (aufweisend einen Abfahrtsort sowie Ankunftsort) des Entleerungsfahrzeugs zu dem Wertstoffbehälter. Dabei kann der Abfahrtszeitpunkt einen zukünftigen Zeitpunkt, wie beispielsweise einen gewissen Abfahrtszeitpunkt an einem entsprechenden Tag oder auch einen zukünftigen Abfahrtszeitpunkt in der betreffenden Woche oder einem Monat umfassen. Beispielsweise kann basierend auf dem Füllstand bestimmt werden, dass das Entleerungsfahrzeugs erst in 2 oder 3 Tagen zu dem betreffenden Entleerungsbehälter losfahren muss. Alternativ kann der Abfahrtszeitpunkt auch ein umgehendes Losfahren des Entleerungsfahrzeugs umfassen.

Die Steueranweisungen für das Entleerungsfahrzeugs können dabei in einer Datenbank gespeichert werden und/oder direkt an das entsprechende Entleerungsfahrzeugs übermittelt werden. Beispielsweise können die Steueranweisungen gesammelt werden und zu gewissen Zeitabschnitten an das Entleerungsfahrzeugs übermittelt werden. Die Steueranweisungen des Entleerungsfahrzeugs können derart mit einem Steuersystem des entsprechenden Entleerungsfahrzeugs konfiguriert sein, dass bei Erhalt einer Steueranweisung automatisch das Navigationssystem des Entleerungsfahrzeugs mit den entsprechenden Informationen über die Fahrroute und dem Abfahrtszeitpunkt gespeist wird. In zukünftigen Modellen, in welcher selbstfahrenden autonome Entleerungsfahrzeuge einsetzbar sind, kann das Übermitteln der Steueranweisungen auch ein automatisches Steuern der Entleerungsfahrzeugs beinhalten.

Mit dem erfindungsgemäßen Verfahren und System zum Steuern von Entleerungsfahrzeug kann basierend auf dem Füllstand eine Wertstofffraktion in einem Wertstoffbehälter und basierend auf Positionsdaten des Wertstoffbehälters sowie dem Entleerungsfahrzeug entsprechende Steueranweisungen für die Entleerungsfahrzeuge generiert werden, um bedarfsgerecht, effizient und schadstoffarm eine Entleerung von Wertstoffbehälter zu organisieren. Ferner können Ressourcen geschont werden, da bei einer entsprechenden erfindungsgemäßen Steuerung von Entleerungsfahrzeug weniger Entleerungsfahrzeug bzw. weniger Kapazität von Entleerungsfahrzeug benötigt wird, da gezielter und effizienter eine Entleerung der vorhandenen Wertstoffbehälters ermöglicht wird. Aufgrund der Kombination der Fahrstreckeninformationen und der Füllstände der Wertstofffraktionen kann einerseits vermieden werden, dass Wertstoffbehälter entleert werden, obwohl kein Bedarf besteht, oder dass Überfüllungen der Wertstoffbehälter vorliegen.

Die Steuereinheit ist beispielsweise ferner konfiguriert, neben der Erstellung von Steueranweisungen auch die entsprechenden Informationen darzustellen, sodass beispielsweise die Wertstoffbehälter und deren Füllstände transparent dargestellt werden können. Entsprechend dieser Füllstands-Daten und der Fahrstreckeninformationen wird eine Tour eines Entleerungsfahrzeugs erstellt und direkt an das Entleerungsfahrzeug oder die Steuereinheit, wie beispielsweise einem Tablet PC, eines jeweiligen Entsorgungspartners, welcher das Entleerungsfahrzeug betreibt, übertragen. Durch dieses Monitoring der Echtdaten ist eine bedarfsgerechte Entleerung der Wertstoffbehälter möglich.

Mit den erzeugten Steueranweisungen an die Entleerungsfahrzeuge wird mit anderen Worten eine automatisierte Tourenplanung zur effizienten Entleerung einer Vielzahl von Wertstoffbehälter zur Verfügung gestellt. Die Steueranweisungen werden für ein bestimmtes Entleerungsfahrzeug konfiguriert und beispielsweise dem Entleerungsfahrzeug oder dem Fahrer direkt als geplante Route auf die Client-/Bedieneinheit (Smartphone, Tablet-PC) des Fahrers bzw. Navigationssystem im Entleerungsfahrzeug (als Clienteinheit) übermittelt. Das Entleerungsfahrzeug wickelt die Entleerungsaufträge (d.h. die Steueranweisungen) digital über die Bedieneinheit ab. Entsprechend wird das Entleerungsfahrzeug direkt zu den verorteten Sammelinseln bzw. Wertstoffbehälter geführt. Die von dem Entleerungsfahrzeug erfassten Auftragsdaten inklusive Dokumente können selbsttätig und automatisch an die Steuereinheit übertragen werden, wo sie für die zukünftige Tourplanung verarbeitet werden kann und abgerufen werden können. In der Steuereinheit stehen dann somit von dem Entleerungsfahrzeug abgeschlossene Aufträge/Touren durch die Rückmeldung bereit. Diese Daten können dann für Effizienzanalysen, als Beweisgrundlage für Entleerungen und für die Verrechnung verwendet werden.

Gemäß einer weiteren beispielhaften Ausführungsform weist das Verfahren ein Bestimmen von Fahrzeuginformationen des Entleerungsfahrzeugs auf, wobei die Steueranweisungen ferner zumindest basierend auf den Fahrzeuginformationen erstellt werden. Die Fahrzeuginformationen können beispielsweise zumindest aufweisen
eine Ladekapazität eines Wertstoffs des Entleerungsfahrzeugs,
einen Wertstoff-Füllstand des Entleerungsfahrzeugs,
einen Treibstofffüllstand,
eine Fahrzeuggröße, insbesondere Fahrzeughöhe, Fahrzeugbreite und/oder Fahrzeuglänge,
eine Achsenzahl,
eine Anhängerankopplung,
einen Wenderadius,
eine Entleerungsgeschwindigkeit des Wertstoffbehälters durch das Entleerungsfahrzeug,
ein aktuelles Gewicht und/oder ein maximal zulässiges Gesamtgewicht des Entleerungsfahrzeugs,
Betriebskosten des Entleerungsfahrzeugs pro Stunde und/oder pro Kilometer.

Die Fahrzeuginformationen bestimmen die Eignung des Entleerungsfahrzeugs, einen oder mehrere Wertstoffbehälter zu entleeren. Ist beispielsweise die Ladekapazität eines Wertstoffs in dem Entleerungsfahrzeug kleiner als der Füllstand und entsprechend das Volumen des Wertstoffs in einem Wertstoffbehälter, so weisen die Steueranweisungen beispielsweise ein mehrmaliges Anfahren des Wertstoffbehälters auf oder die Steuereinheit sendet die Steueranweisungen an ein anderes Entleerungsfahrzeug, welches geeignet ist, den Wertstoffbehälter zu entleeren. Ferner können beispielsweise die Abmessungen des Entleerungsfahrzeugs von der Steuereinheit berücksichtigt werden, um die Fahrroute an die Abmessungen des Entleerungsfahrzeugs anzupassen. Beispielsweise kann die Höhe oder die Breite des Entleerungsfahrzeugs mit den Fahrstreckeninformationen abgeglichen werden, um ungeeignete Passagen (z.B. Unterführungen) zu vermeiden bei der Erstellung der Fahrroute zu vermeiden. Entsprechend kann basierend auf der Länge des Entleerungsfahrzeugs eine Fahrroute angepasst werden, um zum Beispiel zu enge Wenderadien an Kreuzungen nicht in die Fahrroutenplanung und entsprechend in die Steueranweisungen aufzunehmen.

Entsprechend kann beispielsweise basierend auf dem Gewicht des Entleerungsfahrzeugs, beispielsweise des maximalen Leergewichts oder des maximalen Ladegewichts, eine Fahrroute angepasst werden, sodass beispielsweise Einfahrverbote mit Gewichtslimitierungen (zum Beispiel bei Brücken) berücksichtigt werden.

Ferner kann ein Entleerungsfahrzeug mit einem Hänger (Trailer) zur Erhöhung der Kapazität versehen werden. Die damit einhergehende Längenveränderung und der sich ändernden Wenderadius kann ebenfalls in den Fahrzeuginformationen berücksichtigt und ebenfalls entsprechend bei der Routenplanung berücksichtigt werden.

Ferner kann als Zusatzinformation zu dem Hänger ein Hängerstandort angegeben werden, an welchem ein Hänger abgeholt werden kann oder nach dem Entleerungsvorgang erneut abgegeben werden kann. So kann beispielsweise in die Steuereinweisung angegeben werden, dass das Entleerungsfahrzeug zunächst einen Hänger an einem vorbestimmten Hängerstandort ankoppeln soll, den Wertstoffbehälter entladen und nach der Entladung des Hängers diesen wieder zurück an einem bestimmten Hängerstandort zurückbringen soll.

Das Entleerungsfahrzeug fungiert als Zugmaschine für den Hänger bzw. Trailer und kann an diesen lösbar gekoppelt werden. Das Entleerungsfahrzeug weist dabei selbst Wertstoffkammern auf bzw. kann Aufnahmeplätze für befüllte Wertstoffbehälter aufweisen. Beispielsweise kann das Entleerungsfahrzeug mit einem Hänger eine Fahrroute mit Hänger beginnen. Dabei wird vorab ein möglicher Hängerstandort, an welchem ein Hänger entleert bzw. zwischengeparkt werden kann, bestimmt. Auf dem Weg zum Hängerstandort können einzelne Sammelstellen zur Entleerung der Wertstoffbehälter bereits entleert werden. An dem bestimmten Hängerstandort wird der Hänger abgestellt und das Entleerungsfahrzeug fährt mit der geplanten Route zu bestimmten Sammelstellen fort und leert entsprechende Wertstoffbehälter. Anschließend kann das Entleerungsfahrzeug zu dem Hängerstandort zurückfahren und die gesammelten Wertstofffraktion in den Hänger umladen. Anschließend kann das Entleerungsfahrzeug erneut mit oder ohne Hänger weitere Sammelstellen zur Entleerung anfahren. Zusammen mit dem Hänger wird dann final ein geeigneter Verwerter angefahren. Dabei kann das Entleerungsfahrzeug und der Hänger geleert werden, oder befüllte Wertstoffbehälter abgeladen und ggf. mit neuen, leeren Wertstoffbehältern geladen werden. Anschließend wird zum Endpunkt der Fahrroute gefahren und/oder ein nächster Hängerstandort angefahren.

Ferner kann auch ein zwischen Standort des Hängers definiert werden. So kann beispielsweise ein Entleerungsfahrzeug einen Wertstoffbehälter durch Aufnahme des Wertstoffs in dem Hänger entleeren, entlang der Route zu einem nächsten Wertstoffbehälter den Hänger zwischenparken und nach Entleerung des weiteren Wertstoffbehälters zurück zu dem Hänger fahren, um diesen anzukoppeln. Anschließend wird der gesamte Zug bestehend aus dem Entleerungsfahrzeug und dem Hänger zu einem gewünschten Zielstandort, wie beispielsweise dem Verwerter, um den gesamten Wertstoff zu entleeren. Entlang der Fahrroute zum Verwerter können zusätzlich Wertstoffbehälter bei Fahrten mit Hänger entleert bzw. mitgenommen werden.

Hängerstandorte werden basierend auf den Füllständen und Gegebenheiten mittels der Steuereinheit beispielsweise aus einer vorgegebenen Liste bzw. Datenbank gewählt, können aber auch alternativ dynamisch bezogen und geändert werden.

Ferner können fahrzeugspezifische Geschwindigkeitsfaktoren, welche aus Aufzeichnungen des Fahrverhaltens des Entleerungsfahrzeugs erzeugbar sind, in den Fahrstreckeninformationen berücksichtigt werden, um bei der Erzeugung der Steueranweisungen auf das fahrzeugspezifische Fahrverhalten (Beschleunigungswerte, Verzögerungswerte, Durchschnittsgeschwindigkeit) reagieren zu können.

Ferner können Betriebskosten des Entleerungsfahrzeugs, wie beispielsweise Anfallende Kosten pro Stunde oder pro Kilometer, in den Fahrstreckeninformationen berücksichtigt werden. Somit können beispielsweise die Fahrroute oder der Abfahrtszeitpunkt des Entleerungsfahrzeugs anhand der Betriebskosten bestimmt werden.

Gemäß einer weiteren beispielhaften Ausführungsform weisen die Fahrstreckeninformation die Fahrzeit des Entleerungsfahrzeugs zum Wertstoffbehälter, eine aktuelle oder prognostizierte Verkehrslage, die Fahrroute des Entleerungsfahrzeugs zum Wertstoffbehälter, insbesondere die Distanz zwischen dem Entleerungsfahrzeugs und dem Wertstoffbehälter und/oder dem Höhenprofil der Fahrroute, und/oder die Fahrroute des Entleerungsfahrzeugs zum Verwerter und /oder den erwarteten Treibstoffverbrauch des Entleerungsfahrzeugs auf.

Die Fahrstreckeninformationen (z.B. die Verkehrsinformationen) werden von der Bedieneinheit bzw. mittels des Navigationssystem des Entleerungsfahrzeugs jederzeit berücksichtigt. Sollte es zu Staus oder Unfällen auf der Fahrroute kommen, bestimmt die Steuereinheit automatisch eine alternative Fahrroute, um diese Zeitverzögerungen zu reduzieren.

Gemäß einer weiteren beispielhaften Ausführungsform weist das Verfahren ein Bestimmen von Ortsinformationen des Wertstoffbehälters auf. Die Ortsinformationen weisen beispielsweise mögliche Entleerungszeitfenster des Wertstoffbehälters und/oder Wenderauminformationen für das Entleerungsfahrzeug am Wertstoffbehälter auf, wobei die Steueranweisungen ferner zumindest basierend auf den Ortsinformationen erstellt werden.

Ein Entleerungszeitfenster gibt beispielsweise an, zu welchen Zeitpunkten eine Sammelstelle geöffnet ist und angefahren werden kann, um eine entsprechende Entleerung durchzuführen. Bei Berücksichtigung der Entleerungszeit kann beispielsweise eine unnötige Wartezeit des Entleerungsfahrzeugs vermieden werden. Ferner können die Wenderauminformationen angeben, ob ein Entleerungsfahrzeug geeignet ist, in der Sammelstelle zu rangieren, um eine Entleerung durchzuführen. Zusammen mit den oben beschriebenen Fahrzeuginformationen kann so ein effizienteres Entleeren der Wertstoffbehälter ermöglicht werden. Ferner kann berücksichtigt werden, ob bei einem Umdrehen von dem Entleerungsfahrzeug möglich ist bzw. die Anfahrt und Abfahrt von derselben Richtung oder ob Wertstoffbehälter immer von der richtigen Straßenseite angefahren werden müssen.

Gemäß einer weiteren beispielhaften Ausführungsform weist das Verfahren das Bestimmen von Wertstoffbehälterinformationen des Wertstoffbehälters auf, wobei die Steueranweisungen auch zudem zumindest basierend auf den Wertstoffbehälterinformationen bestimmt werden. Die Wertstoffbehälterinformationen weisen beispielsweise die Behälterbauart des Wertstoffbehälters, die Handhabungsmechanik und/oder Handhabungszeit des Wertstoffbehälters auf. Somit kann sichergestellt werden, dass das Entleerungsfahrzeug geeignet ist, den entsprechenden zu leerenden Wertstoffbehälter zu bedienen und zu entleeren.

Gemäß einer weiteren beispielhaften Ausführungsform weist das Verfahren ein Bestimmen von Wertstoffinformationen der Wertstofffraktion auf, wobei die Steueranweisungen ferner zumindest basierend auf den Wertstoffinformationen erstellt werden. Die Wertstoffinformationen weisen beispielsweise die Art der Wertstofffraktion, das Gewicht der Wertstofffraktion, die Klassifikation der Wertstofffraktion, und/oder den Zustand der Wertstofffraktion auf. Einhergehend mit der Wertstoffinformation ist beispielsweise eine Fahrroute auswählbar, da beispielsweise Gefahrengüter nicht auf bestimmten Strecken transportiert werden dürfen. Ferner kann basierend darauf die Eignung eines Entleerungsfahrzeugs sowie Auswahl eines Verwerters bestimmt werden.

Gemäß einer weiteren beispielhaften Ausführungsform weist das Verfahren ferner ein Bestimmen einer Füllgeschwindigkeit des Wertstoffbehälters auf, wobei die Steueranweisungen und insbesondere der Abfahrzeitpunkt zudem basierend auf der Füllgeschwindigkeit des Wertstoffbehälters bestimmt wird.

Gemäß einer beispielhaften Ausführungsform wird die Füllgeschwindigkeit in Echtzeit mittels des Füllstandssensors bestimmt. Gemäß einer weiteren beispielhaften Ausführungsform zudem oder alternativ die Füllgeschwindigkeit aus zeitbezogenen Daten von einer Datenbank bezogen.

Basierend auf der Bestimmung der Füllgeschwindigkeit kann beispielsweise prognostiziert werden, wann ein bestimmter Grenzwert des Füllstands des Wertstoffbehälters erreicht wird. Basierend auf dem prognostizierten Wert kann beispielsweise eine entsprechende Steueranweisung aufweisend einen Abfallzeitpunkt des Entleerungsfahrzeugs stimmt werden. Dabei kann in Echtzeit ein entsprechender Füllstands kontinuierlich oder gewissen Zeitabschnitten bezogen werden. Ferner können zeitbezogenen Daten aus einer Datenbank bezogen werden. Zeitbezogenen (Saisonale) Daten definieren die Füllgeschwindigkeit in gewissen Zeiträumen. So kann beispielsweise aus erfahrungsbedingten Werten geschlossen werden, dass sich beispielsweise im Sommer die Wertstoffbehälter einer gewissen Wertstofffraktion schneller füllen als im Winter. Entsprechende Erfahrungswerte sind in einer Datenbank abgelegt, welche von der Steuereinheit zur Erstellung von Steueranweisungen berücksichtigt werden können. Die Füllstände, welche bei der Erstellung der Steueranweisungen herangezogen werden, können sich auf die Bestände einzelner Wertstoffbehälter beziehen oder auf mehrere Wertstoffbehälter, die sich in einer gemeinsamen Sammelstelle befinden. Die Füllstandsprognose unterliegt beispielsweise einer linearen Extrapolation.

Gemäß einem weiteren Aspekt der vorliegenden Erfindung weist das Verfahren ein Bestimmen eines Verwerters auf, bei welchem die Wertstofffraktion von dem Entleerungsfahrzeug verwertbar ist. Ferner werden die Positionsdaten des Verwerters bestimmt. Ferner werden weitere Steueranweisungen für das Entleerungsfahrzeug zum Entleeren des Entleerungsfahrzeugs bei dem Verwerter, wobei die weiteren Steueranweisungen einen Abfahrzeitpunkt des Entleerungsfahrzeugs und eine Fahrroute (V1-V4) des Entleerungsfahrzeugs zu dem Verwerter aufweisen. Die weiteren Steueranweisungen werden entsprechend basierend auf den Positionsdaten des Verwerters und den Fahrstreckeninformationen zum Verwerter erstellt.

Mit dem Begriff Verwerter wird insbesondere die Entleerungsstelle für den gesammelten Wertstoff aus den Entleerungsfahrzeugen bzw. ein Abstellort für die eingesammelten Wertstoffbehälter definiert. Dabei kann die Steuereinheit auf einer Gesamtroute mehrere Verwerter für das Entleerungsfahrzeug auswählen und bei der Fahrroute einplanen. Der Verwerter bildet eine Sammelstelle für die Wertstofffraktionen, welche von verschiedenen Entleerungsfahrzeugen am Ort des Verwerters abgegeben werden. Der Verwerter kann beispielsweise eine Müllverbrennungsanlage darstellen oder eine Recyclinganlage zum Trennen und Aufbereiten einer Wertstofffraktion. Alternativ kann der Verwerter ebenfalls ein Zwischenlager darstellen, in welchen für den Weitertransport eine Wertstofffraktion zwischengelagert wird.

Mit dem Verwerter werden zusätzlich die Positionsdaten des Verwerters bereitgestellt. Diese können basierend auf Datenbank antreten oder mittels Positionsbestimmungssensoren bereitgestellt werden.

Gemäß einer weiteren beispielhaften Ausführungsform weist das Verfahren ein Bestimmen eines weiteren Verwerters, bei welchem die Wertstofffraktion von dem Entleerungsfahrzeug verwertbar ist, und ein Bestimmen von Positionsdaten des weiteren Verwerters auf. Ferner werden Fahrstreckeninformationen zwischen dem Entleerungsfahrzeug und dem weiteren Verwerter bestimmt. Die weiteren Steueranweisungen weisen einen Abfahrzeitpunkt des Entleerungsfahrzeugs und eine Fahrroute des Entleerungsfahrzeugs zu dem Verwerter oder dem weiteren Verwerter auf, wobei die weiteren Steueranweisungen basierend auf den Positionsdaten des Verwerters und des weiteren Verwerters und den Fahrstreckeninformationen zum Verwerter und zudem weiteren Verwerter erstellt werden.

Gemäß einer weiteren beispielhaften Ausführungsform werden die Steueranweisungen basierend auf Verwerterdaten des Verwerters und des weiteren Verwerters erstellt. Die Verwerterdaten weisen beispielsweise Daten über die Arten der Wertstofffraktion, die an den Verwertern aufnehmbar sind, eine Kapazitätsinformation zur Annahme der Wertstofffraktion an einem der Verwerter Öffnungs- und Entladezeiten der Verwerter und/oder eine Vergütungs-/ Kosteninformation für die Annahme der Wertstofffraktion an einem der Verwerter. Ferner weisen die Verwerterdaten auch Informationen über Abstell-Möglichkeiten für Entleerungsfahrzeuge, insbesondere mit Anhängern, auf. So kann beispielsweise bestimmt werden, ob das Entleerungsfahrzeuge auch an einem Ort des Verwerters rangieren kann und ggf. abgestellt werden kann.

Mit den Positionsdaten können auch weitere Verwerterdaten bereitgestellt werden. Beispielsweise können die Verwerter entsprechende AnnahmeKontingente aufweisen. Wird beispielsweise ein maximales Annahmekontingent bei einem Verwerter erreicht, so kann diese Information der Steuereinheit bereitgestellt werden, sodass basierend darauf die Fahrstreckeninformationen aktualisiert werden und entsprechend ein anderer Verwerter oder ein anderer Abfahrtzeitpunkt des Entleerungsfahrzeugs ausgewählt wird. Ferner können mit den Verwerterdaten Öffnungs- und Entladezeiten des Verwerters berücksichtigt werden.

Ferner weisen die Verwerterinformationen die Art der Wertstofffraktion auf, welche von dem Verwerter aufgenommen werden können.

Zudem können die anfallenden Kosten, welche pro Kilogramm Wertstofffraktion am Verwerter anfallen, bereitgestellt werden und der Steuereinheit zur Verfügung gestellt werden. Die Steuereinheit kann die Steueranweisungen entsprechend an das Entleerungsfahrzeug anpassen und beispielsweise einen Verwerter als Zielort auswählen, welcher die kosteneffizientesten Entleerungskonditionen aufweist.

Die Verwerterdaten können aus einer Datenbank bereitgestellt werden oder in Echtzeit von einer entsprechenden Informationseinheit am Verwerter von der Steuereinheit bezogen werden.

Gemäß einer weiteren beispielhaften Ausführungsform weist das Verfahren ein Bestimmen eines Füllstands einer weiteren Wertstofffraktion eines weiteren Wertstoffbehälters mittels eines weiteren Füllstandssensors sowie ein Bestimmen von Positionsdaten des weiteren Wertstoffbehälters und des Entleerungsfahrzeugs auf. Ferner werden Fahrstreckeninformationen basierend auf den Positionsdaten zwischen dem Entleerungsfahrzeug und dem weiteren Wertstoffbehälter bestimmt. Die Steueranweisungen werden zumindest basierend auf dem Füllstand des Wertstoffbehälters, dem Füllstand des weiteren Wertstoffbehälters und den Fahrstreckeninformationen zwischen dem Entleerungsfahrzeug und dem Wertstoffbehälter und dem weiteren Wertstoffbehälter erstellt, wobei die Steueranweisungen einen Abfahrzeitpunkt des Entleerungsfahrzeugs und eine Fahrroute des Entleerungsfahrzeugs zu dem Wertstoffbehälter und/oder dem weiteren Wertstoffbehälter aufweisen.

In einem Beispiel kann beispielsweise die Steuereinheit entscheiden, welcher Wertstoffbehälter zuerst von dem Entleerungsfahrzeug angesteuert wird. Hierbei wird insbesondere die oben beschriebenen Informationen, wie beispielsweise der jeweilige Füllstand eines Wertstoffbehälters berücksichtigt, sowie die entsprechenden Fahrstreckeninformationen zu dem jeweiligen Wertstoffbehälter. Entsprechend können die Fahrzeuginformationen, die Fahrstreckeninformationen, die Ortinformationen und/oder die Wertstoffbehälterinformationen wie bereits beschrieben berücksichtigt werden. Beispielsweise kann aufgrund einer besseren Verkehrslage zunächst der weiter entfernte Wertstoffbehälter angesteuert werden als der zunächst naheliegendste Wertstoffbehälter. Die Steuereinheit kann hierzu die entsprechenden Fahrstreckeninformationen und Ortsinformationen heranziehen, um basierend darauf entsprechende Steueranweisungen für Entleerungsfahrzeug zu generieren.

Gemäß einer weiteren beispielhaften Ausführungsform kann der Wertstoffbehälter und der weitere Wertstoffbehälter an einem gemeinsamen Aufstellungsort oder einen unterschiedlichen Aufstellungsort aufweisen, wobei das Entleerungsfahrzeug eingerichtet ist, zumindest die Wertstofffraktion und die weitere Wertstofffraktion, welche sich insbesondere von der Wertstofffraktion unterscheidet, zu transportieren. Das Entleerungsfahrzeug wird zu dem Aufstellungsort mittels der Steueranweisung gesteuert, wenn der Füllstand des Wertstoffbehälters oder des weitere Wertstoffbehälters einen vorbestimmten Grenzwert des Füllstands überschreitet.

Gemäß einer weiteren beispielhaften Ausführungsform weisen der Wertstoffbehälter und der weitere Wertstoffbehälter jeweils einen Priorisierungsstatus auf. Gemäß dem Verfahren werden Steueranweisungen für die Entleerung des Wertstoffbehälters und des weiteren Wertstoffbehälters zumindest basierend auf dem Priorisierungsstatus des Wertstoffbehälters und des weiteren Wertstoffbehälters erstellt.

Der Prioritätsstatus für die Wertstoffbehälter kann fest vorgegeben werden oder basierend auf prioritätsgewichtende Daten oder Informationen neu zwischen den Wertstoffbehältern vergeben werden. Weisen beispielsweise zwei Wertstoffbehälter denselben Füllstand auf und ähnliche Fahrstreckeninformationen, so werden Steueranweisungen für das Entleerungsfahrzeug derart erstellt, dass zunächst der Wertstoffbehälter mit dem höheren Prioritätsstatus angefahren wird. Die einzelnen Faktoren, wie z.B. Ortsinformationen, Fahrstreckeninformationen, Fahrzeuginformationen, etc., können unterschiedlich gewichtet werden und entsprechen mit einem unterschiedlichen Faktor zum Prioritätsstatus beitragen.

Ferner kann die Gewichtung z.B. an Zielparametern, wie z.B. Gesamt-Entleerungsgeschwindigkeit aller Wertstoffbehälter, Schadstoffarmes Durchführen der Wertstoffbehälter, Entleerung der Wertstoffbehälter mit geringen Systemressourcen (z.B. geringe Anzahl an Entleerungsfahrzeugen) oder Kostenoptimierte Entleerung der Wertstoffbehälter (d.h. Entleerung mit den günstigsten Betriebskosten.

Die Prioritäten bei der Auswahl von anzufahrenden Sammelstellen können je nach Optimierungseingabe (schnellste Fahrroute, ökologischste Fahrroute, Priorisierung der Entleerung überfüllter Wertstoffbehälter etc.) bestimmt werden.

Gemäß einer weiteren beispielhaften Ausführungsform wird das Erstellen von Steueranweisungen für das Entleerungsfahrzeug zum Entleeren des Wertstoffbehälters mittels der Steuereinheit in vorgegebenen Zeitintervallen, insbesondere auch nach dem Abfahrzeitpunkt des Entleerungsfahrzeugs, wiederholt. Somit können Änderungen, z.B. der Fahrstreckeninformationen, berücksichtig werden und die Steueranweisungen für das Entleerungsfahrzeug regelmäßig aktualisiert werden.

Gemäß einer weiteren beispielhaften Ausführungsform weist das Verfahren ferner ein Bestimmen von Fahrstreckeninformationen zwischen einem weiteren Entleerungsfahrzeug und dem Wertstoffbehälter auf. Ferner werden Steueranweisungen für das weitere Entleerungsfahrzeug zum Entleeren des Wertstoffbehälters erstellt, wobei die Steueranweisungen einen Abfahrzeitpunkt des weiteren Entleerungsfahrzeugs und eine Fahrroute des weiteren Entleerungsfahrzeugs zu dem Wertstoffbehälter aufweisen. Die Steueranweisungen werden zudem basierend auf einem Vergleich der Fahrstreckeninformationen des Entleerungsfahrzeugs und des weiteren Entleerungsfahrzeugs erstellt.

Gemäß einer weiteren beispielhaften Ausführungsform weist das Verfahren ein Bestimmen von weiteren Fahrzeuginformationen des weiteren Entleerungsfahrzeugs auf, wobei die Steueranweisungen zudem basierend auf einem Vergleich der Fahrzeuginformationen des Entleerungsfahrzeugs und der weiteren Fahrzeuginformationen des weiteren Entleerungsfahrzeugs erstellt werden.

So kann beispielsweise die Steueranweisung für ein Entleerungsfahrzeug die Fahrroute zu dem Wertstoffbehälter aufweisen, während die weitere Steueranweisung für das andere Entleerungsfahrzeug keinen Abfahrtszeitpunkt bzw. keine Fahrroute vorgibt oder eine Fahrroute zu einem anderen Wertstoffbehälter vorgibt. Aufgrund der Bewertung des Vergleichs der entsprechenden Fahrstreckeninformationen und Abfahrtszeitpunkte für die Entleerungsfahrzeuge kann ein ressourcensparendes Organisieren der Entsorgung einer Vielzahl von Wertstoffbehälter erreicht werden. Somit können eine Vielzahl von Entleerungsfahrzeugen berücksichtigt werden und das geeignetste basierend auf dessen Positionsdaten oder Fahrstreckeninformationen ausgewählt werden und entsprechende Steueranweisungen generiert werden.

Beispielsweise können von einem Onlinekartendienst Punkt-zu-Punkt-Fahrzeiten werden bei jedem Systemaufruf des Onlinekartendiensts basierend auf den Fahrstreckeninformationen (Verkehrsbelastung, Lieferbarkeit von Straßen, etc.) bezogen. Je nach Anwendungsfall werden die Punkt-zu-Punkt Fahrtzeiten als Matrix bei jeder Berechnung neu angefragt oder lokal abgespeichert und nur aktualisiert, falls sich z.B. das Sammelstellennetz der Entleerungsbehälter ändert. Die von den Onlinekartendiensten zu beziehenden Fahrzeiten können dynamisch sein, d.h. sie berücksichtigen die Verkehrssituation zum Fahrzeitpunkt nach Datum und Uhrzeit Die möglichen Routen und Fahrzeiten inkludieren z.B. die Fahrzeuginformationen (z.B. die angegebenen Gewichte und Dimensionen des Entleerungsfahrzeugs (Parametrierbar), sowie z.B. an den Geschwindigkeitsprofilen und Fahrverboten für Entleerungsfahrzeuge.

Die Steuereinheit kann eine Benutzeroberfläche aufweisen, mittels welcher ein Benutzerparameter manuell eingeben werden können. Beispielsweise kann vorgegeben werden, welcher Wertstoffbehälter bzw. welche Sammelinsel in einer Tourenplanung bzw. Entleerungsplanung berücksichtigt werden soll. Ferner kann vorgegeben werden, ob nach Zeit oder Kilometer optimiert werden soll, sodass basierend auf der Eingabe die entsprechenden Steueranweisungen an die Entleerungsfahrzeuge angepasst werden.

Ferner kann gemäß einer weiteren beispielhaften Ausführungsform die Fahrstreckeninformationen und Abfahrtszeitpunkte eines Entleerungsfahrzeugs in einer Datenbank gespeichert werden und nach Abfahren der Fahrstrecken die tatsächlich benötigten Fahrzeiten und Verbrauchsparameter bestimmt und ebenfalls in einer Datenbank gespeichert werden. Anschließend kann verifiziert werden, ob die Ist-Daten mit den entsprechenden Daten der Steueranweisungen übereinstimmen oder abweichen. Falls eine Abweichung festgestellt wird, können diese Abweichungen in zukünftig zu bestimmenden Steueranweisungen einfließen, um eine genauere Planung entsprechend genauere zukünftige Steueranweisungen zu erzielen. Somit ergibt sich automatisch bei mehreren Tourentagen ein automatisches Clustering von Gebieten beim Algorithmus bzw. den Steueranweisungen.

Ferner kann vorgegeben werden, ab welchem Grenzwert des Füllstands eine Entleerung der Wertstoffbehälter eingeplant werden soll. In Einzelfällen kann manuell vorgegeben werden, dass entsprechend eine gewisse Anzahl von Überfüllungen von Wertstoffbehälter zulässig ist und erst dann eine entsprechende Entleerung stattfindet.

Ferner kann vorgegeben werden, ob das Gesamtsystem überlastet ist und so zum Beispiel eine Vielzahl von überfüllten Entleerungsbehältern bereits aufweist. In diesem Fall können beispielsweise Sammelstellen bzw. Entleerungsbehälter aus der Planung ausgeschlossen werden, auch wenn deren Füllgranulat bereits über dem Grenzwert (zum Beispiel 80 % der maximalen Füllung) liegen.

Ferner kann beispielsweise eine minimale Menge an Wertstofffraktion, welche pro Zeiteinheit (zum Beispiel Tourentag) minimal abgeholt werden soll. Dies wird dazu verwendet, dass sich die Situation im Sammelgebiet nicht aufschaukelt und zu einem Zeitpunkt plötzlich zu viele Entleerungsbehälter einen maximalen Führerstand erreichen, trotz derzeit geringen Füllstandgrades. Dabei können Informationen basieren auf historischen Daten, wie z.B. Materialaufkommen pro Jahr, herangezogen werden.

Ferner kann die Steuereinheit über eine Anzeigeneinrichtung (beispielsweise über einen Monitor oder am Bildschirm oder über ein Portal, beispielsweise Internetportal) die Füllstand-Daten der Führerstandsensoren in den Entleerungsbehälter darstellen, die Tourenplanung vorgenommen und verschiedene Reportingfunktionen angeboten werden. Ferner werden die Steueranweisungen für die einzelnen Entleerungsfahrzeuge grafisch dargestellt und zum Beispiel deren Fahrroute und entsprechende Abfahrtszeiten dargestellt.

Ferner wird eine Datenbank bereitgestellt, aus welcher Daten vergangener Touren bzw. Fahrrouten der sprechenden Entleerungsfahrzeuge und Behälterentleerung gespeichert und entsprechend grafisch dargestellt werden können. Somit wird eine Übersicht über vergangene und zukünftige Touren gezeigt.

Entsprechend werden auch die Fahrstreckeninformationen, die Ortsinformationen, die Wertstoffbehälter Informationen, die Wertstoffinformationen, die Fördergeschwindigkeit der Wertstoffbehälter die Verwerterdaten sowie die Positionsdaten des Verwerters dargestellt und können entsprechend manuell angepasst werden. Entsprechend wird auch eine Verwaltung der Verwertungspartner und der Entleerungsfahrzeuge übersichtlich dargestellt.

Auf die Steuereinheit kann insbesondere mit verschiedenen Bedieneinheiten, wie beispielsweise Desktop-Computer, Smartphones oder ein Tablet-Computer, zugegriffen werden. Entsprechend können verschiedene Applikationen (Apps) bzw. Software auf den Bedieneinheiten mit der Steuereinheit kommunizieren. Auf den entsprechenden Bedieneinheiten können aktuelle Zustandsdaten dargestellt werden, wie beispielsweise Bewegungen der Wertstoffbehälter (d. h. ein Aufstellen oder ein Abziehen eines Wertstoffbehälters), oder die entsprechenden Fahrrouten der verschiedenen Entleerungsfahrzeuge dargestellt werden. Auch können beispielsweise zur Dokumentation Fotos (beispielsweise von den Wendemöglichkeiten vor dem Wertstoffbehälter oder Fotos von Wertstoffbehälter selbst) mit der Bedieneinheit aufgenommen werden und der Steuereinheit zur Verfügung gestellt werden. Ferner können Standorte der Wertstoffbehälter auf einer Onlinekarte, Kennzeichnung von Füllständen der Wertstoffbehälter, Darstellung relevanter Kennzahlen und deren Entwicklung der Fahrrouten und der Füllung der Wertstoffbehälter, Überblick über Behälterwarnungen (z.B. fehlendes Sensorsignal) farblich und numerisch dargestellt werden.

Ferner kann die nächste, geplante Entleerung und vergangene Entleerungen der Wertstoffbehälter dargestellt werden, eine Verlinkung zur Detailansicht jeder Sammelinsel bereitgestellt werden, sowie historische Daten wie beispielsweise der Füllstandverlauf der letzten Monate, eine Prognose über den zukünftigen Füllstandverlauf sowie Wertstoffbehälter-Informationen (Typ, Größe, Hersteller) dargestellt werden.

Mit dem erfindungsgemäßen System können ferner die Dienstleister der Entleerungsfahrzeuge sowie die Betreiber der Verwerter einen Planungshorizont für die Menge an zu entleerenden Wertstoffbehältern sowie einen, über die Menge an zu sammelnden Wertstofffraktionen erhalten. So können beispielsweise die Anzahl der eingesetzten Entsorgungsfahrzeuge für einen zukünftigen Zeitbereich oder die Auswahl und Kombination von Wertstofffraktionen bestimmt werden. Ferner ist eine Berechnung der Steueranweisungen für mehrere Tage hintereinander generierbar, welche dann auch aufeinander abgestimmt sind. Erfindungsgemäß ist ebenfalls eine automatische Auswahl von Sammelinseln basierend auf den aktuellen Füllständen der Wertstoffbehälter und deren berechneten Prognosen sowie eine manuelle Berücksichtigung von Hinterlegten manuellen Abholintervallen möglich. Optional sind auch basierend auf den Fahrzeuginformationen Entleerungsfahrzeuge mit Hänger einplanbar.

Ferner kann ein Betreiber eines Entleerungsfahrzeugs die Tage der Steuereinheit vorgeben, an welchem Entleerungsfahrten möglich sind und welche Positionsdaten und Fahrzeuginformationen das Entleerungsfahrzeug aufweist. Die Steuereinheit erstellt basierend darauf entsprechende Steueranweisungen (beispielsweise Fahrrouten und Abfahrtszeiten Punkte für das Entleerungsfahrzeug) und generiert, basierend auf den Eingabeparametern, eine entsprechende Routenführung bzw. entsprechende Steueranweisungen. Dabei wird die gesammelte Menge der Wertstofffraktion, die in einer definierten Arbeitszeit und den gefahrenen Kilometern entleert wird, bestimmt und gegebenenfalls optimiert. Durch dieses Effizienzkriterium stellt die Steuereinheit sicher, dass idealerweise möglichst volle und unbedingt notwendige Sammelstellen bzw. Wertstoffbehälter angefahren und entleert werden. Restriktionen, die bei der Fahrzeugs- und Regionskonfiguration hinterlegt wurden, finden Berücksichtigung.

Zusammenfassend kann die Steuereinheit Steueranweisungen für mehrtägige Touren mit mehreren Entleerungsfahrzeugen planen, welche gleichzeitig im Einsatz sind. Die Steuereinheit berechnet basierend auf den oben beschriebenen Daten bzw. Informationen, wie z.B. den Positionsdaten des Wertstoffbehälters oder des Entleerungsfahrzeugs und/oder den entsprechenden Fahrstreckeninformationen, wie viele Tage benötigt werden, um die Wertstoffbehälter zu entleeren. Dabei können Anfangs-, Mindest- und Maximalarbeitszeiten pro Tag und eine Pause vorgegeben werden. Das Optimierungszeitfenster ist variabel und besteht aus vorgegebenen Tagen, an denen Entleerungsfahrzeuge zur Verfügung stehen.

Zudem können beispielsweise Steueranweisungen für ein Entleerungsfahrzeug erzeugt werden, um Zwischenentleerungen an einem Tag (zum Beispiel Sammlung-Verwerter-Sammlung-Verwerter) basierend auf den Fahrzeugkapazitäten zu berücksichtigt. Zudem können in bestimmten Fällen in, zum Beispiel bei einer Überfüllung eines Wertstoffbehälters, Manipulationszeiten für das Entleeren zugerechnet werden (Beispielsituation: Behälter überfüllt, Flaschen stehen daneben und müssen per Hand aufgelesen werden).

In einem computerlesbaren Speichermedium gemäß einem Ausführungsbeispiel der vorliegenden Erfindung ist ein Programm zum Steuern von Entleerungsfahrzeugen zum Entleeren von Wertstoffbehälter, gespeichert, welches Programm, wenn es von einem oder mehreren Prozessoren (des Nutzer-Endgeräts und/oder mindestens einer damit kommunizierfähig koppelbaren Steuereinrichtung) ausgeführt wird, die oben beschriebenen Verfahrensschritte oder einen Teil davon steuert bzw. durchführt.

Das erfindungsgemäße Verfahren zum Steuern von Entleerungsfahrzeugen ist insbesondere ein Computer-implementiertes Verfahren. Beispielsweise weist ein Programm-Element (Computerprogramm-Element) gemäß einem Ausführungsbeispiel der vorliegenden Erfindung das Verfahren zum Steuern von Entleerungsfahrzeugen zum Entleeren von Wertstoffbehälter mit den erfindungsgemäßen Verfahrensschritten auf (bzw. führt diese durch), wenn es von einem oder mehreren Prozessoren (zum Beispiel auf der Steuereinheit) ausgeführt wird. Zum Beispiel kann das Programm-Element als App ausgebildet sein, die von dem Nutzer-Endgerät oder von dem Server Computer bzw. der Steuereinheit über ein Kommunikationsnetzwerk von einem Quell-Server heruntergeladen und dann darauf ausgeführt werden kann. Das Programm-Element kann einzelne Teilelemente aufweisen, die an unterschiedlichen Prozessoren ausgeführt werden. Auch die Steuereinheit und/oder die Client-/Bedieneinheit kann mit einer entsprechenden Software ausgestattet werden.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden. Insbesondere kann bei einem Ausführungsbeispiel der Erfindung die Software zumindest teilweise auch als App, d.h. als downloadbare und dann installierbare Software-Applikation, insbesondere für die Steuereinheit und/oder Client-/Bedieneinheit, ausgebildet sein.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 zeigt eine schematische Darstellung eines Systems zum Steuern von Entleerungsfahrzeugen zum Entleeren von Wertstoffbehältern gemäß einer beispielhaften Ausführungsform der vorliegenden Erfindung.
Fig. 2 zeigt eine schematische Darstellung eines Verfahrens zum Steuern von Entleerungsfahrzeugen zum Entleeren von Wertstoffbehältern gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

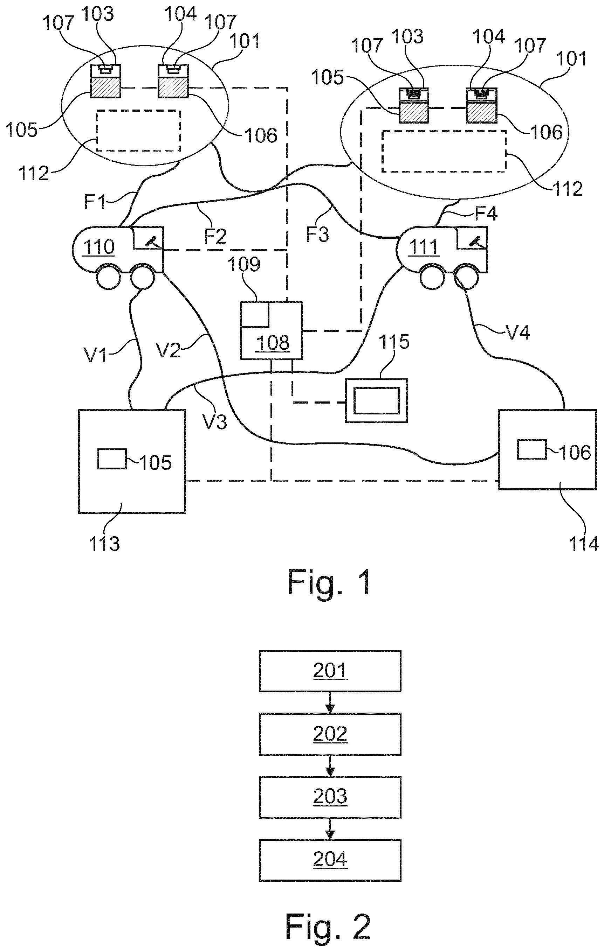

**Fig. 1** zeigt eine schematische Darstellung eines Systems 100 zum Steuern von Entleerungsfahrzeugen 110, 111 zum Entleeren von Wertstoffbehältern 103, 104 gemäß einer beispielhaften Ausführungsform der vorliegenden Erfindung.

Die Wertstoffbehälter 103, 104 sind beispielsweise mit einem Füllstandssensor 107 als Füllstandindikator zum Bestimmen eines Füllstands einer Wertstofffraktion 105, 106 ausgebildet.

Die Entleerungsfahrzeuge 110, 111 sind ausgebildet zum Entleeren der entsprechenden Wertstofffraktion 105, 106 der entsprechenden Wertstoffbehälter 103, 104 oder zur Aufnahme der Wertstoffbehälter 103, 104.

Die geographischen Positionen der Wertstoffbehälter 103, 104 und der Entleerungsfahrzeuge 110, 111 sind über eine Positionsdateneinheit 109 empfangbar. Die Positionsdateneinheit 109 kann beispielsweise drahtlos, beispielsweise über Internetprotokolle, zum Datenaustausch mit den Wertstoffbehälter 103, 104 und den Entleerungsfahrzeugen 110, 111 gekoppelt werden.

Die Steuereinheit 108 ist konfiguriert zum Bestimmen von Fahrstreckeninformationen zwischen den Entleerungsfahrzeugen 110, 111 und den Wertstoffbehältern 103, 104 basierend auf den Positionsdaten.

Die Steuereinheit 108 erzeugt basierend auf dem Füllstand der Wertstoffbehälter 103, 104 und den Fahrstreckeninformationen Steueranweisungen für die Entleerungsfahrzeuge 110, 111 zum Entleeren der entsprechenden Wertstoffbehälter 103, 104. Die Steueranweisungen weisen beispielsweise einen Abfahrzeitpunkt der Entleerungsfahrzeuge 110, 111 und eine Fahrroute F1-F4 der Entleerungsfahrzeuge 110, 111 zu den Wertstoffbehältern 103, 104 auf.

An einer Sammelstelle 101, 102 bzw. einer Sammelinsel sind beispielsweise eine oder eine Vielzahl von Wertstoffbehältern 103, 104 platziert, in welchen jeweils eine Wertstofffraktion 105, 106 von einem Verbraucher abgegeben werden kann.

Der Wertstoffbehälter 103, 104 ist an einer Sammelstelle 101, 102 angeordnet und dient zum Aufnehmen der Wertstofffraktionen 105, 106 insbesondere von einem Verbraucher. Der Wertstoffbehälter 103, 104 ist insbesondere mit einem Füllstandssensor 107 ausgestattet. Mittels des Füllstandssensors 107 kann entsprechend ein Befüllungsgrad des Wertstoffbehälters 103, 104 gemessen werden.

Ferner werden die Positionsdaten der Sammelstelle 101, 102 bzw. der Wertstoffbehälter 103, 104 mittels der Positionsdateneinheit 109 bestimmt. Die Positionsdateneinheit 109 kann beispielsweise aus einer Datenbank entsprechende Positionsdaten der Wertstoffbehälter 103, 104 beziehen. Ferner kann ein Wertstoffbehälter 103, 104 mit einem Ortsbestimmungssensor, wie beispielsweise einem GPS-Sensor, ausgestattet sein, um die aktuellen Positionsdaten des Wertstoffbehälters 103, 104 bereitzustellen.

Ein Entleerungsfahrzeug 110, 111 weist zumindest einen Aufnahmebehälter zum Aufnehmen einer Wertstofffraktion 105, 106 auf. Ferner kann ein Entleerungsfahrzeug 110, 111 mehrere Aufnahmebehälter aufweisend zum Aufnehmen mehrerer Wertstofffraktionen 105, 106. Ein Entleerungsfahrzeug 110, 111 weist insbesondere eine entsprechende Handhabungsmechanik auf, um einen Wertstoffbehälter 103, 104 zu entleeren. Beispielsweise kann der Wertstoffbehälter 103, 104entsprechend gegriffen werden und geöffnet werden, sodass die entsprechenden Wertstofffraktion 105, 106 in den Aufnahmebehälter des Entleerungsfahrzeugs ein und 10, 111 aufgenommen werden kann. Das Entleerungsfahrzeug weist ferner insbesondere ein Steuergerät auf, welches mit dem Navigationssystem des Entleerungsfahrzeugs 110, 111 bzw. des Fahrers des Entleerungsfahrzeugs und mit der Steuereinheit 108 zum Austauschen der Steuereinweisungen gekoppelt ist. Die Übertragungspfade der Daten werden in Fig. 1 gestrichelt dargestellt.

Die Steuereinheit 108 ist insbesondere mit der Positionsdateneinheit 109 gekoppelt oder weist diese auf. Die Steuereinheit 108 weist beispielsweise einen Prozessor auf, welcher basierend auf den Eingabedaten die Steueranweisung für die Entleerungsfahrzeuge 110, 111 generiert. Die Steuereinheit 108 kann beispielsweise einen zentralen Server aufweisen, welcher mit dezentralen Client-Computern bzw. Client-Einheiten 115 zum Austausch von Daten gekoppelt ist. Beispielsweise können die Positionsdaten der Wertstoffbehälter 103, 104 oder die Fahrstreckeninformationen des Entleerungsfahrzeugs 110, 111 manuell eingegeben werden. Alternativ können die entsprechenden Informationen über Datenbanken bezogen werden.

So können beispielsweise die Bedieneinheiten 115, wie beispielsweise Desktop-Computer, ein Smartphone oder ein Tablet-Computer, drahtlos mit der Steuereinheit 108, beispielsweise über das Internet, kommunizieren, um Daten der Steuereinheit 108 bereitzustellen oder entsprechende Daten, wie beispielsweise die Steueranweisungen betreffenden Abfahrtszeiten des Entleerungsfahrzeugs 110, 111 oder eine Fahrroute F1-F4 des Entleerungsfahrzeugs 110, 111 zu dem Wertstoffbehälter 103, 104 zu beziehen.

Die Steuereinheit 108 ist insbesondere dazu konfiguriert, basierend auf den Positionsdaten des Wertstoffbehälters und des Entleerungsfahrzeugs Fahrstreckeninformationen zwischen diesen zu erstellen. Die Steueranweisungen umfassen zumindest einen Abfahrtszeitpunkt des Entleerungsfahrzeugs 110, 111 und eine Fahrroute F1-F4 des Entleerungsfahrzeugs 110, 111 zu dem Wertstoffbehälter 103, 104. Dabei kann der Abfahrtszeitpunkt einen zukünftigen Zeitpunkt, wie beispielsweise einen gewissen Abfahrtszeitpunkt an einem entsprechenden Tag oder auch einen zukünftigen Abfahrtszeitpunkt in der betreffenden Woche oder einem Monat umfassen. Beispielsweise kann basierend auf dem Füllstand bestimmt werden, dass das Entleerungsfahrzeugs erst in 2 oder 3 Tagen zu dem betreffenden Entleerungsbehälter 103, 104 losfahren muss. Alternativ kann der Abfahrtszeitpunkt auch ein umgehendes Losfahren des Entleerungsfahrzeugs 110, 111 umfassen.

Mit den erzeugten Steueranweisungen an die Entleerungsfahrzeuge 110, 111 wird mit anderen Worten eine automatisierte Tourenplanung zur effizienten Entleerung einer Vielzahl von Wertstoffbehälter 103, 104 zur Verfügung gestellt. Die Steueranweisungen werden für ein bestimmtes Entleerungsfahrzeug 110, 111 konfiguriert und beispielsweise dem Entleerungsfahrzeug 110, 111 oder dem Fahrer direkt als geplante Route auf die Bedieneinheit 115 (Smartphone, Tablet-PC) des Fahrers bzw. Navigationssystem im Entleerungsfahrzeug 110, 111 übermittelt.

Die Erstellung von Steueranweisungen kann ferner die Fahrzeuginformationen der Entleerungsfahrzeuge 110, 111 zu berücksichtigen. Die Entleerungsfahrzeuge 110, ein und 11 unterscheiden sich in vielen unterschiedlichen Parametern, wie beispielsweise die maximale Zuladung, dem Wenderadius oder der Handhabungsmechanik zur Handhabung gewisser Typen von Wertstoffbehältern 103, 104. Die Fahrzeuginformationen können beispielsweise zumindest aufweisen eine Ladekapazität eines Wertstoffs des Entleerungsfahrzeugs 110, 111, einen Wertstoff-Füllstand des Entleerungsfahrzeugs 110, 111, einen Treibstofffüllstand, eine Fahrzeuggröße, insbesondere Fahrzeughöhe, Fahrzeugbreite und/oder Fahrzeuglänge, eine Achsenzahl, eine Anhängerankopplung, einen Wenderadius, eine Entleerungsgeschwindigkeit des Wertstoffbehälters 103, 104 durch das Entleerungsfahrzeug 110, 111, ein aktuelles Gewicht und/oder ein maximal zulässiges Gesamtgewicht des Entleerungsfahrzeugs 110, 111, und/oder Betriebskosten des Entleerungsfahrzeugs 110, 111 pro Stunde und/oder pro Kilometer.

Die Fahrzeuginformationen bestimmen die Eignung des Entleerungsfahrzeugs 110, 111, einen oder mehrere Wertstoffbehälter 103, 104 zu entleeren. Ist beispielsweise die Ladekapazität eines Wertstoffs in dem Entleerungsfahrzeug 110, 111 kleiner als der Füllstand und entsprechend das Volumen des Wertstoffs in einem Wertstoffbehälter, so weisen die Steueranweisungen beispielsweise ein mehrmaliges Anfahren des Wertstoffbehälters 103, 104 auf oder die Steuereinheit 108 sendet die Steueranweisungen an ein anderes Entleerungsfahrzeug 110, 111, welches geeignet ist, den Wertstoffbehälter 103, 104 zu entleeren. Ferner kann ein Entleerungsfahrzeug 110, 111 mit einem Hänger (Trailer) zur Erhöhung der Kapazität versehen werden. Die damit einhergehende Längenveränderung und der sich ändernden Wenderadius kann ebenfalls in den Fahrzeuginformationen berücksichtigt und ebenfalls entsprechend bei der Routenplanung berücksichtigt werden. So können beispielsweise Ortsinformationen der Sammelstelle 101, 102 bzw. der Wertstoffbehälter 103, 104 angegeben werden, welche insbesondere Informationen über einen Wendekreis 112 der Sammelinsel 101, 102 bereitstellen. Zusammen mit den Fahrzeuginformationen der Entleerungsfahrzeuge 110, 111 kann entsprechend eine Eignung eines Entleerungsfahrzeugs 110, 111 bestimmt werden und entsprechend basierend darauf eine Steueranweisung durch die Steuereinheit 108 vorgegeben werden.

Ferner können fahrzeugspezifische Geschwindigkeitsfaktoren, welche aus Aufzeichnungen des Fahrverhaltens des Entleerungsfahrzeugs 110, 111 erzeugbar sind, in den Fahrstreckeninformationen berücksichtigt werden, um bei der Erzeugung der Steueranweisungen auf das fahrzeugspezifische Fahrverhalten (Beschleunigungswerte, Verzögerungswerte, Durchschnittsgeschwindigkeit) reagieren zu können.

In den Fahrstreckeninformationen können insbesondere Angaben über die Fahrzeit des Entleerungsfahrzeugs zum Wertstoffbehälter 103, 104, eine aktuelle oder prognostizierte Verkehrslage, die Fahrroute F1-F4 des Entleerungsfahrzeugs 110, 111 zum Wertstoffbehälter 103, 104 und/oder die Fahrroute V1-V4 des Entleerungsfahrzeugs 110, 111 zum Verwerter 113, 114 und /oder den erwarteten Treibstoffverbrauch des Entleerungsfahrzeugs 110, 111 auf.

Die Fahrstreckeninformationen (z.B. die Verkehrsinformationen) werden von der Bedieneinheit 115 bzw. mittels des Navigationssystem des Entleerungsfahrzeugs 110, 111 jederzeit berücksichtigt. Sollte es zu Staus oder Unfällen auf der Fahrroute F1-F4; V1-V4 kommen, bestimmt die Steuereinheit 108 automatisch eine alternative Fahrroute F1-F4; V1-V4, um diese Zeitverzögerungen zu reduzieren.

Ferner können bei der Erstellung von Steueranweisungen Ortsinformationen der Sammelstellen 101, 102 bzw. der darin platzierten Wertstoffbehälter 103, 104 von der Steuereinheit 108 berücksichtigt werden. Die Ortsinformationen weisen beispielsweise mögliche Entleerungszeitfenster der Wertstoffbehälter 103, 104 und/oder Wenderauminformationen (Wendekreis 112) für das Entleerungsfahrzeug 110, 111 am Wertstoffbehälter 103, 104 auf. Ein Entleerungszeitfenster gibt beispielsweise an, zu welchen Zeitpunkten eine Sammelstelle 101, 102 geöffnet ist und angefahren werden kann, um eine entsprechende Entleerung durchzuführen. Ferner können die Wenderauminformationen angeben, ob ein Entleerungsfahrzeug 110, 111 geeignet ist, in der Sammelstelle ein und 1, 102 zu rangieren, um eine Entleerung durchzuführen.

Ferner kann die Steuereinheit 108 Wertstoffbehälterinformationen des Wertstoffbehälters 103, 104 bei der Erstellung der Steueranweisungen berücksichtigen. Die Wertstoffbehälterinformationen weisen beispielsweise die Behälterbauart des Wertstoffbehälters, die Handhabungsmechanik und/oder Handhabungszeit des Wertstoffbehälters auf. Somit kann sichergestellt werden, dass das Entleerungsfahrzeug 110, 111 geeignet ist, den entsprechenden zu leerenden Wertstoffbehälter 103, 104 zu bedienen und zu entleeren.

Ferner kann die Steuereinheit 108 Wertstoffinformationen der Wertstofffraktion 105, 106 bei der Erstellung der Steueranweisungen berücksichtigen. Die Wertstoffinformationen weisen beispielsweise die Art der Wertstofffraktion 105, 106, das Gewicht der Wertstofffraktion 105, 106, die Klassifikation der Wertstofffraktion 105, 106, und/oder den Zustand der Wertstofffraktion 105, 106 auf. Einhergehend mit der Wertstoffinformation ist beispielsweise eine Fahrroute F1-F4, V1-V4 auswählbar, da beispielsweise Gefahrengüter nicht auf bestimmten Strecken transportiert werden dürfen. Ferner kann basierend darauf die Eignung eines Entleerungsfahrzeugs 110, 111 sowie Auswahl eines Verwerters 113, 114 bestimmt werden.

Ferner kann die Steuereinheit 108 bei der Erstellung der Steueranweisungen basierend auf einer Füllgeschwindigkeit des Wertstoffbehälters 103, 104 berücksichtigen. Basierend darauf kann entsprechend die Notwendigkeit einer Entleerung eines Wertstoffbehälters 103, 104 und entsprechend ein Abfallzeitpunkt zu dem Wertstoffbehälter 103, 104 bestimmt werden. Basierend auf der Bestimmung der Füllgeschwindigkeit kann beispielsweise prognostiziert werden, wann ein bestimmter Grenzwert des Füllstands des Wertstoffbehälters 103, 104 erreicht wird. Basierend auf dem prognostizierten Wert kann beispielsweise eine entsprechende Steueranweisung aufweisend einen Abfallzeitpunkt des Entleerungsfahrzeugs einer 110, 111 stimmt werden. Dabei kann in Echtzeit ein entsprechender Füllstands kontinuierlich oder gewissen Zeitabschnitten bezogen werden. Die Füllstände, welche bei der Erstellung der Steueranweisungen herangezogen werden, können sich auf die Bestände einzelner Wertstoffbehälter 103, 104 beziehen oder auf mehrere Wertstoffbehälter 103, 104, die sich in einer gemeinsamen Sammelstelle 101, 102 befinden.

Ferner ist die Steuereinheit 108 konfiguriert, Steueranweisungen zu für die Entleerungsfahrzeuge 110, 111 zu geeigneten Verwertern 113, 114 zu generieren. Die Steueranweisungen können beispielsweise basierend auf Positionsdaten und/oder unten beschriebener Verwerterdaten des Verwerters 113, 114 bestimmt werden. Die entsprechenden weiteren Steueranweisungen können beispielsweise einen Abfahrzeitpunkt des Entleerungsfahrzeugs eine 110, 111 von dem zuletzt entleerten Wertstoffbehälter 103, 104 und eine Fahrroute V1-V4 des Entleerungsfahrzeugs ein und 10, 111 zu dem Verwerter 113, 114 aufweisen.

Die Verwerter 113, 114 sind Entleerungsstellen für den gesammelten Wertstoff 105, 106 aus den Entleerungsfahrzeugen 110, 111. Der Verwerter bildet eine Sammelstelle für die Wertstofffraktionen 105, 106, welche von verschiedenen Entleerungsfahrzeugen 110, 111 am Ort des Verwerters 113, 114 abgegeben werden.

Die Verwerterdaten weisen beispielsweise Daten über die Arten der Wertstofffraktion 105, 106, die an den Verwertern aufnehmbar sind, eine Kapazitätsinformation zur Annahme der Wertstofffraktion 105, 106 an einem der Verwerter 113, 114, Öffnungs- und Entladezeiten der Verwerter 113, 114 und/oder eine Vergütungs-/ Kosteninformation für die Annahme der Wertstofffraktion 105, 106 an einem der Verwerter 113, 114.

Ferner können maximale Annahmekontingente bei einem Verwerter 113, 114 vorgegeben werden und berücksichtigt werden, falls diese erreicht werden. Die Steuereinheit 108 kann basierend darauf die Fahrstreckeninformationen aktualisieren und entsprechend ein anderer Verwerter 113, 114 auswählen oder ein anderer Abfahrtzeitpunkt des Entleerungsfahrzeugs 110, 111 Stimmen. Auch Kostendaten, wie beispielsweise die Kosten pro Kilogramm Wertstofffraktion 105, 106 am Verwerter 113, 114 anfallen können bei der Erstellung der Steueranweisungen berücksichtigt werden.

Liegen in dem zu verwaltenden Gebiet eine Mehrzahl von Sammelstellen 101, 102 vor, bestimmt die Steuereinheit 108, welcher Wertstoffbehälter 103, 104 zuerst von dem Entleerungsfahrzeug 110, 111 angesteuert wird. Hierbei wird insbesondere die oben beschriebenen Informationen, wie beispielsweise der jeweilige Füllstand eines Wertstoffbehälters 103, 104 sowie dessen Füllgeschwindigkeit berücksichtigt, sowie die entsprechenden Fahrstreckeninformationen zu dem jeweiligen Wertstoffbehälter 103, 104.

Das Entleerungsfahrzeug 110, 111 wird zu dem Aufstellungsort der Wertstoffbehälter 103, 104 mittels der Steueranweisung gesteuert, wenn der Füllstand eines Wertstoffbehälters 103, 104 einen vorbestimmten Grenzwert des Füllstands überschreitet.

Ferner kann die Steuereinheit 108 einen Prioritätsstatus für die Wertstoffbehälter 103, 104 berücksichtigen. Weisen beispielsweise zwei Wertstoffbehälter 103, 104 denselben Füllstand auf und ähnliche Fahrstreckeninformationen, so werden Steueranweisungen für das Entleerungsfahrzeug 110, 111 derart erstellt, dass zunächst der Wertstoffbehälter 103, 104 mit dem höheren Prioritätsstatus angefahren wird. Die einzelnen Faktoren, wie z.B. Ortsinformationen, Fahrstreckeninformationen, Fahrzeuginformationen, etc., können unterschiedlich gewichtet werden und entsprechen mit einem unterschiedlichen Faktor zum Prioritätsstatus beitragen.

**Fig. 2** zeigt eine schematische Darstellung eines Verfahrens zum Steuern von Entleerungsfahrzeugen 110, 111 zum Entleeren von Wertstoffbehältern 103, 104 gemäß einer beispielhaften Ausführungsform der vorliegenden Erfindung.

Das Verfahren weist zumindest ein Bestimmen eines Füllstands einer Wertstofffraktion 105 eines Wertstoffbehälters 103 mittels eines Füllstandindikators, z.B. eines Füllstandssensors 107 (Schritt 201).

Ferner werden Positionsdaten des Wertstoffbehälters 103, 104 und des Entleerungsfahrzeugs 110, 111 bestimmt (Schritt 202).

Ferner werden Fahrstreckeninformationen zwischen einem Entleerungsfahrzeug 110, 111 und dem Wertstoffbehälter 103, 104 mittels einer Steuereinheit 108 basierend auf den Positionsdaten des Wertstoffbehälters 103 und des Entleerungsfahrzeugs 110, 111 bestimmt (Schritt 203.

Die Steuereinheit 108 erstellt basierend darauf Steueranweisungen für das Entleerungsfahrzeug 110, 111 zum Entleeren des Wertstoffbehälters 103, 104 zumindest basierend auf dem Füllstand des Wertstoffbehälters 103, 104 und den Fahrstreckeninformationen, wobei die Steueranweisungen einen Abfahrzeitpunkt des Entleerungsfahrzeugs 110, 111 und eine Fahrroute F1-F4 des Entleerungsfahrzeugs 110, 111 zu dem Wertstoffbehälter 103, 104 aufweisen (Schritt 204).

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

100 System
101 Sammelstelle
102 weitere Sammelstelle
103 Wertstoffbehälter
104 weiterer Wertstoffbehälter
105 Wertstofffraktion
106 weitere Wertstofffraktion
107 Füllstandssensor
108 Steuereinheit
109 Positionsdateneinheit
110 Entleerungsfahrzeug
111 weiteres Entleerungsfahrzeug
112 Wendekreis
113 Verwerter
114 weiterer Verwerter
115 Client-/Bedieneinheit
F1-F4 Fahrroute zum Wertstoffbehälter
V1-V4 Fahrroute zum Verwerter

## Patentansprüche

1. Verfahren zum Steuern von Entleerungsfahrzeugen zum Entleeren von Wertstoffbehälter (103), das Verfahren aufweisend
Bestimmen eines Füllstands einer Wertstofffraktion (105) eines Wertstoffbehälters (103) mittels eines Füllstandindikators,
Bestimmen von Positionsdaten des Wertstoffbehälters (103) und des Entleerungsfahrzeugs (110),
Bestimmen von Fahrstreckeninformationen zwischen einem Entleerungsfahrzeug (110) und dem Wertstoffbehälter (103) mittels einer Steuereinheit (108) basierend auf den Positionsdaten des Wertstoffbehälters (103) und des Entleerungsfahrzeugs (110),
Erstellung von Steueranweisungen für das Entleerungsfahrzeug (110) zum Entleeren des Wertstoffbehälters (103) mittels der Steuereinheit (108) zumindest basierend auf dem Füllstand des Wertstoffbehälters (103) und den Fahrstreckeninformationen,
wobei die Steueranweisungen einen Abfahrzeitpunkt des Entleerungsfahrzeugs (110) und eine Fahrroute (F1-F4) des Entleerungsfahrzeugs (110) zu dem Wertstoffbehälter (103) aufweisen.

2. Verfahren gemäß Anspruch 1,
wobei der Füllstandindikator ein Füllstand des Wertstoffbehälters (103) aufweist, welcher mittels eines Füllstandssensors (107) gemessen wird.

3. Verfahren gemäß Anspruch 1 oder 2, ferner aufweisend
Bestimmen von Fahrzeuginformationen des Entleerungsfahrzeugs (110) wobei die Fahrzeuginformationen zumindest aufweisen
eine Ladekapazität eines Wertstoffs des Entleerungsfahrzeugs (110),
einen Wertstoff-Füllstand des Entleerungsfahrzeugs (110),
einen Treibstofffüllstand,
eine Fahrzeuggröße, insbesondere Fahrzeughöhe, Fahrzeugbreite und/oder Fahrzeuglänge,
eine Achsenzahl,
eine Anhängerankopplung,
einen Wenderadius,
eine Entleerungsgeschwindigkeit des Wertstoffbehälters (103) durch das Entleerungsfahrzeug (110),
ein aktuelles Gewicht und/oder ein maximal zulässiges Gesamtgewicht des Entleerungsfahrzeugs (110), und/oder
Betriebskosten des Entleerungsfahrzeugs (110) pro Stunde und/oder pro Kilometer,
wobei die Steueranweisungen ferner zumindest basierend auf den Fahrzeuginformationen erstellt werden.

4. Verfahren gemäß einem der Ansprüche 1 bis 3,
wobei die Fahrstreckeninformation aufweisen
die Fahrzeit des Entleerungsfahrzeugs (110) zum Wertstoffbehälter (103),
die Fahrroute (F1-F4) des Entleerungsfahrzeugs (110) zum Wertstoffbehälter (103), insbesondere die Distanz zwischen dem Entleerungsfahrzeugs (110) und dem Wertstoffbehälter (103) und/oder dem Höhenprofil der Fahrroute (F1-F4),
eine aktuelle oder prognostizierte Verkehrslage auf der Fahrroute (F1-F4), und/oder
den erwarteten Treibstoffverbrauch.

5. Verfahren gemäß einem der Ansprüche 1 bis 4, ferner aufweisend
Bestimmen von Ortsinformationen des Wertstoffbehälters (103), wobei die Ortsinformationen aufweisen
mögliche Entleerungszeitfenster des Wertstoffbehälters (103),
Wenderauminformationen für das Entleerungsfahrzeug (110) am Wertstoffbehälter (103),
wobei die Steueranweisungen ferner zumindest basierend auf den Ortsinformationen erstellt werden.

6. Verfahren gemäß einem der Ansprüche 1 bis 5, ferner aufweisend Bestimmen von Wertstoffbehälterinformationen des Wertstoffbehälters (103),
wobei die Wertstoffbehälterinformationen aufweisen
Behälterbauart des Wertstoffbehälters (103), und/oder
Handhabungsmechanik und/oder Handhabungszeit des Wertstoffbehälters (103),
wobei die Steueranweisungen ferner zudem zumindest basierend auf den Wertstoffbehälterinformationen erstellt werden, und/oder
wobei das Verfahren aufweist
Bestimmen von Wertstoffinformationen der Wertstofffraktion (105) wobei die Wertstoffinformationen aufweisen
Art der Wertstofffraktion (105),
Gewicht der Wertstofffraktion (105),
Klassifikation der Wertstofffraktion (105), und/oder
Zustand der Wertstofffraktion (105),
wobei die Steueranweisungen ferner zumindest basierend auf den Wertstoffinformationen erstellt werden und/oder
wobei das Verfahren aufweist
Bestimmen einer Füllgeschwindigkeit des Wertstoffbehälters (103), wobei die Steueranweisungen und insbesondere der Abfahrzeitpunkt zudem basierend auf der Füllgeschwindigkeit des Wertstoffbehälters (103) bestimmt wird,
wobei die Füllgeschwindigkeit insbesondere in Echtzeit mittels des Füllstandssensors (107) bestimmt wird, oder
wobei die Füllgeschwindigkeit aus zeitbezogenen Daten von einer Datenbank bezogen werden.

7. Verfahren gemäß einem der Ansprüche 1 bis 6, ferner aufweisend
Bestimmen eines Verwerters, bei welchem die Wertstofffraktion (105) von dem Entleerungsfahrzeug (110) verwertbar ist,
Bestimmen von Positionsdaten des Verwerters,
Bestimmen von Fahrstreckeninformationen zwischen dem Entleerungsfahrzeug (110) und dem Verwerter (113),
Erstellen von weiteren Steueranweisungen für das Entleerungsfahrzeug (110) zum Entleeren des Entleerungsfahrzeugs (110) bei dem Verwerter (113),
wobei die weiteren Steueranweisungen einen Abfahrzeitpunkt des Entleerungsfahrzeugs (110) und eine Fahrroute (V1-V4) des Entleerungsfahrzeugs (110) zu dem Verwerter (113) aufweisen, und
wobei die weiteren Steueranweisungen ferner basierend auf den Positionsdaten des Verwerters und den Fahrstreckeninformationen zum Verwerter (113) erstellt werden.

8. Verfahren gemäß einem der Ansprüche 1 bis 7, ferner aufweisend
Bestimmen eines weiteren Verwerters, bei welchem die Wertstofffraktion (105) von dem Entleerungsfahrzeug (110) verwertbar ist,
Bestimmen von Positionsdaten des weiteren Verwerters,
Bestimmen von Fahrstreckeninformationen zwischen dem Entleerungsfahrzeug (110) und dem weiteren Verwerter (114),
wobei die weiteren Steueranweisungen einen Abfahrzeitpunkt des Entleerungsfahrzeugs (110) und eine Fahrroute (V1-V4) des Entleerungsfahrzeugs (110) zu dem Verwerter (113) oder dem weiteren Verwerter (114) aufweisen, und
wobei die weiteren Steueranweisungen basierend auf den Positionsdaten des Verwerters und des weiteren Verwerters und den Fahrstreckeninformationen zum Verwerter (113) und zudem weiteren Verwerter (114) erstellt werden, wobei die Steueranweisungen insbesondere basierend auf Verwerterdaten des Verwerters (113) und des weiteren Verwerters (114) erstellt werden,
wobei die Verwerterdaten aufweisen
Arten der Wertstofffraktion (105), die an den Verwertern (113, 114) aufnehmbar sind,
eine Kapazitätsinformation zur Annahme der Wertstofffraktion (105) an einem der Verwerter (113, 114),
Öffnungs- und Entladezeiten der Verwerter (113, 114), und /oder
eine Vergütungs-/ Kosteninformation für die Annahme der Wertstofffraktion an einem der Verwerter (113, 114).

9. Verfahren gemäß einem der Ansprüche 1 bis 8, ferner aufweisend
Bestimmen eines Füllstands einer weiteren Wertstofffraktion (106) eines weiteren Wertstoffbehälters (104) mittels eines weiteren Füllstandindikators, insbesondere eines weiteren Füllstandssensors (107),
Bestimmen von Positionsdaten des weiteren Wertstoffbehälters (104) und des Entleerungsfahrzeugs (110),
Bestimmen von Fahrstreckeninformationen basierend auf den Positionsdaten zwischen dem Entleerungsfahrzeug (110) und dem weiteren Wertstoffbehälter (104),
wobei die Steueranweisungen zumindest basierend auf dem Füllstand des Wertstoffbehälters (103), Füllstand des weiteren Wertstoffbehälters (104) und den Fahrstreckeninformationen zwischen dem Entleerungsfahrzeug (110) und dem Wertstoffbehälter (103) und dem weiteren Wertstoffbehälter (104) erstellt werden,
wobei die Steueranweisungen einen Abfahrzeitpunkt des Entleerungsfahrzeugs (110) und eine Fahrroute (F1-F4) des Entleerungsfahrzeugs (110) zu dem Wertstoffbehälter (103) und/oder dem weiteren Wertstoffbehälter (104) aufweisen,
wobei der Wertstoffbehälter (103) und der weitere Wertstoffbehälter (104) insbesondere an einem gemeinsamen Aufstellungsort vorliegen,
wobei das Entleerungsfahrzeug (110) insbesondere eingerichtet ist, zumindest die Wertstofffraktion (105) und die weitere Wertstofffraktion (106), welche sich insbesondere von der Wertstofffraktion (105) unterscheidet, zu transportieren,
wobei insbesondere das Entleerungsfahrzeug (110) zu dem Aufstellungsort mittels der Steueranweisung gesteuert wird, wenn der Füllstand des Wertstoffbehälters (103) oder des weitere Wertstoffbehälters (104) einen vorbestimmten Grenzwert des Füllstands überschreitet.

10. Verfahren gemäß Anspruch 9,
wobei der Wertstoffbehälter (103) und der weitere Wertstoffbehälter (104) jeweils einen Priorisierungsstatus aufweisen, und das Verfahren ferner aufweist
Erstellen der Steueranweisungen für die Entleerung des Wertstoffbehälters (103) und des weiteren Wertstoffbehälters (104) ferner zumindest basierend auf dem Priorisierungsstatus des Wertstoffbehälters (103) und des weiteren Wertstoffbehälters (104).

11. Verfahren gemäß einem der Ansprüche 1 bis 10,
wobei das Erstellen von Steueranweisungen für das Entleerungsfahrzeug (110) zum Entleeren des Wertstoffbehälters (103) mittels der Steuereinheit (108) in vorgegebenen Zeitintervallen, insbesondere auch nach dem Abfahrzeitpunkt des Entleerungsfahrzeugs (110), wiederholt wird.

12. Verfahren gemäß einem der Ansprüche 1 bis 11, ferner aufweisend
Bestimmen von Fahrstreckeninformationen zwischen einem weiteren Entleerungsfahrzeug (111) und dem Wertstoffbehälter (103),
Erstellung von Steueranweisungen für das weiteren Entleerungsfahrzeug (111) zum Entleeren des Wertstoffbehälters (103),
wobei die Steueranweisungen einen Abfahrzeitpunkt des weiteren Entleerungsfahrzeugs (111) und eine Fahrroute (F1-F4) des weiteren Entleerungsfahrzeugs (111) zu dem Wertstoffbehälter (103) aufweisen, und wobei die Steueranweisungen zudem basierend auf einem Vergleich der Fahrstreckeninformationen des Entleerungsfahrzeugs (110) und des weiteren Entleerungsfahrzeugs (111) erstellt werden,
wobei das Verfahren insbesondere aufweist
Bestimmen von weiteren Fahrzeuginformationen des weiteren Entleerungsfahrzeugs (111),
wobei die Steueranweisungen zudem basierend auf einem Vergleich der Fahrzeuginformationen des Entleerungsfahrzeugs (110) und der weiteren Fahrzeuginformationen des weiteren Entleerungsfahrzeugs (111) erstellt werden.

13. System (100) zum Steuern von Entleerungsfahrzeugen zum Entleeren von Wertstoffbehältern (103, 104), das System (100) aufweisend
einen Wertstoffbehälter (103) welcher konfiguriert ist, mittels eines Füllstandindikators einen Füllstand einer Wertstofffraktion (105) des Wertstoffbehälters (103) zu bestimmen,
ein Entleerungsfahrzeug (110) zum Entleeren des Wertstoffbehälters (103),
eine Positionsdateneinheit (109) zum Bestimmen von Positionsdaten des Wertstoffbehälters (103) und des Entleerungsfahrzeugs (110),
eine Steuereinheit (108), welche mit der Positionsdateneinheit (109) gekoppelt ist und konfiguriert ist zum Bestimmen von Fahrstreckeninformationen zwischen dem Entleerungsfahrzeug (110) und dem Wertstoffbehälter (103) basierend auf den Positionsdaten des Wertstoffbehälters (103) und des Entleerungsfahrzeugs (110),
wobei die Steuereinheit (108) ferner konfiguriert ist basierend auf dem Füllstand des Wertstoffbehälters (103) und den Fahrstreckeninformationen Steueranweisungen für das Entleerungsfahrzeug (110) zum Entleeren des Wertstoffbehälters (103) zu erstellen,
wobei die Steueranweisungen einen Abfahrzeitpunkt des Entleerungsfahrzeugs (110) und eine Fahrroute (F1-F4) des Entleerungsfahrzeugs (110) zu dem Wertstoffbehälter (103) aufweisen.

14. System (100) gemäß Anspruch 13, ferner aufweisend
zumindest einen Verwerter (113), bei welchem die Wertstofffraktion (105) von dem Entleerungsfahrzeug (110) verwertbar ist,
wobei die Steuereinheit (108) konfiguriert ist zum Bestimmen von Positionsdaten des Verwerters und zum Bestimmen von Fahrstreckeninformationen zwischen dem Entleerungsfahrzeug (110) und dem Verwerter (113),
wobei die Steuereinheit (108) ferner konfiguriert ist zum Erstellen von weiteren Steueranweisungen für das Entleerungsfahrzeug (110) zum Entleeren des Entleerungsfahrzeugs (110) bei dem Verwerter (113) basierend auf den Positionsdaten des Verwerters und der Fahrstreckeninformationen zum Verwerter (113),
wobei die weiteren Steueranweisungen einen Abfahrzeitpunkt des Entleerungsfahrzeugs (110) und eine Fahrroute (V1-V4) des Entleerungsfahrzeugs (110) zu dem Verwerter (113) aufweisen.

15. System (100) gemäß Anspruch 13 oder 14, ferner aufweisend
einen weiteren Wertstoffbehälter (104), welcher konfiguriert ist, mittels eines weiteren Füllstandindikators, welcher insbesondere messbar mittels eines weiteren Füllstandssensors (107) ist, eines Füllstands einer weiteren Wertstofffraktion (106) des weiteren Wertstoffbehälters (104) zu bestimmen, wobei die Steuereinheit (108) konfiguriert ist zum Bestimmen des Füllstands der weiteren Wertstofffraktion (106) des weiteren Wertstoffbehälters (104) mittels des weiteren Füllstandindikators,
wobei die Steuereinheit (108) ferner konfiguriert ist zum Bestimmen von Positionsdaten des weiteren Wertstoffbehälters (104) und des Entleerungsfahrzeugs (110),
die Steuereinheit (108) ferner konfiguriert zum Bestimmen von Fahrstreckeninformationen basierend auf den Positionsdaten zwischen dem Entleerungsfahrzeug (110) und dem weiteren Wertstoffbehälter (104),
wobei die Steueranweisungen zumindest basierend auf dem Füllstand des Wertstoffbehälters (103), Füllstand des weiteren Wertstoffbehälters (104) und den Fahrstreckeninformationen zwischen dem Entleerungsfahrzeug (110) und dem Wertstoffbehälter (103) und dem weiteren Wertstoffbehälter (104) erstellt werden,
wobei die Steueranweisungen einen Abfahrzeitpunkt des Entleerungsfahrzeugs (110) und eine Fahrroute (F1-F4) des Entleerungsfahrzeugs (110) zu dem Wertstoffbehälter (103) und/oder dem weiteren Wertstoffbehälter (104) aufweisen, und/oder
wobei das System (100) ferner aufweist
ein weiteres Entleerungsfahrzeug (111),
wobei die Positionsdateneinheit (109) ferner konfiguriert ist zum Bestimmen von Positionsdaten des weiteren Entleerungsfahrzeugs (111),
wobei die Steuereinheit (108) ferner konfiguriert ist zum Bestimmen von Fahrstreckeninformationen zwischen einem weiteren Entleerungsfahrzeug (111) und dem Wertstoffbehälter (103),
wobei die Steuereinheit (108) ferner konfiguriert ist zur Erstellung von Steueranweisungen für das weiteren Entleerungsfahrzeug (111) zum Entleeren des Wertstoffbehälters (103),
wobei die Steueranweisungen ferner einen Abfahrzeitpunkt des weiteren Entleerungsfahrzeugs (111) und eine Fahrroute (F1-F4) des weiteren Entleerungsfahrzeugs (111) zu dem Wertstoffbehälter (103) aufweisen, und
wobei die Steueranweisungen zudem basierend auf einem Vergleich der Fahrstreckeninformationen des Entleerungsfahrzeugs (110) und des weiteren Entleerungsfahrzeugs (111) erstellbar sind, und/oder
wobei die Steuereinheit insbesondere eine zentrale Steuereinheit ist,
wobei das System insbesondere aufweist
zumindest eine Bedieneinheit, welche mit der Steuereinheit gekoppelt ist,
wobei die Bedieneinheit eine Anzeigeeinrichtung und/oder eine Eingabeeinrichtung aufweist
wobei die Bedieneinheit insbesondere ein Desktop-Computer, ein Smartphone oder ein Tablet-Computer ist.
